# EUROPEAN PATENT APPLICATION

(11) **EP 4 756 529 A1**
(43) Date of publication of application: **10.06.2026**
(21) Application number: 25220023.3
(22) Date of filing: 02.12.2025
(51) Int. Cl.: G03B 17/02, G03B 17/04, G03B 30/00, H04N 5/00, H04M 1/00

(54) **ELECTRONIC DEVICES BASED ON MOTORIZED ROTATING-SHAFT ASSEMBLIES**

(30) Priority: 03.12.2024 CN 202422972561 U; 03.12.2024 CN 202411764076; 31.12.2024 US 202419007063; 03.01.2025 US 202563741555 P
(71) Applicant: Zepp Inc., Cupertino, California 95014 (US)
(72) Inventor: HUANG, Wang, Cupertino, California 95014 (US); LI, Chunlin, Cupertino, California 95014 (US); SHAO, Mingbao, Cupertino, California 95014 (US); ZENG, Bo, Cupertino, California 95014 (US); ZOU, Aijun, Cupertino, California 95014 (US); LI, Tongchun, Cupertino, California 95014 (US); BAI, Kaile, Cupertino, California 95014 (US)
(74) Representative: Dai, Simin

(57) **Abstract**

This disclosure provides an electronic device based on a motorized rotating-shaft assembly, including a first main body, a second main body and a connection mechanism. The first main body and the second main body are connected via the connection mechanism. The second main body includes a first surface and at least one camera arranged on the first surface. The connection mechanism is configured to drive at least one of the second main body or the first main body to rotate, so as to expose or conceal at least part of the first surface. The electronic device based on the motorized rotating-shaft assembly in the present disclosure features high flexibility and convenience.

## Description

### TECHNICAL FIELD

This application relates to electronic devices, and in particular to electronic devices based on motorized rotating-shaft assemblies.

### BACKGROUND

With the continuous development of technologies, an increasing variety of electronic devices have emerged, and portable camera devices (such as action cameras) have come into being. Portable camera devices are capable of capturing and recording images in scenarios like sports and outdoor activities of users, and have the advantages such as being lightweight, easy to carry, waterproof, and dustproof.

However, portable camera devices on the market typically have camera modules integrally and fixedly arranged with the device bodies, and this configuration results in a relatively large overall device size and limited adjustability of shooting angles, making it difficult to effectively adapt to different types of application scenarios. Users often need to frequently adjust the position and angle of the portable camera device manually, which increases the difficulty and complexity of use.

### SUMMARY

The present disclosure provides electronic devices based on motorized rotating-shaft assemblies.

In a first aspect, an electronic device based on a motorized rotating-shaft assembly is disclosed, including: a first main body, a second main body, and a connection mechanism. The first main body and the second main body are connected via the connection mechanism.

The connection mechanism is connected (e.g., is movably connected) to both the first main body and the second main body.

The second main body includes a first surface and at least one camera arranged on the first surface. In some implementations, the first surface is free of a display.

The connection mechanism includes a motorized rotating-shaft assembly configured to drive at least one of the first main body or the second main body to rotate, so as to cause at least part of the first surface (at least a part of the first surface, such as the at least one camera) to be physically exposed or concealed.

In some implementations, the first main body includes a host housing portion (also referred to as a first housing portion, or referred to as a host assembly), and the second main body includes a camera housing portion (also referred to as a second housing portion, or referred to as a camera assembly).

In some implementations, the electronic device includes a housing reconfigurable between an unfolded configuration and a folded configuration about a folding axis, and the housing includes the first housing portion and the second housing portion.

In some implementations, the motorized rotating-shaft assembly is configured to cause coordinated rotation of the first and second housing portions about the folding axis, so as to cause the electronic device to switch between different configurations, such as an unfolded configuration and a folded configuration.

In some implementations, the motorized rotating-shaft assembly is configured to drive the first main body and the second main body to rotate synchronously in opposite directions.

In some implementations, the electronic device has an unfolded configuration, a folded configuration, and an intermediate configuration.

In some implementations, in the folded configuration, an angle between the first main body and the second main body is 0°. In this way, the first surface of the second main body is substantially in contact with or faces the first main body, and the first main body overlies at least a part of the first surface to physically occlude the at least one camera.

In some implementations, in the unfolded configuration, an angle between the first main body and the second main body is 180°. In this way, the first main body is substantially parallel to the first surface of the second main body, and the at least one camera is exposed.

In some implementations, in the intermediate configuration, the angle between the first main body and the second main body is greater than 0° and less than 180°.

In some other implementations, the unfolded configuration and the intermediate configuration are collectively referred to as an unfolded configuration, and the electronic device has an unfolded configuration and a folded configuration. In this case, in the folded configuration, the first main body overlies at least part of the first surface to physically occlude the at least one camera, and the unfolded configuration is a configuration other than the folded configuration.

In some implementations, the second main body further includes a second surface opposite to the first surface and a display arranged on the second surface.

In some implementations, the electronic device further includes an input module. The input module is arranged in the first main body. The input module is configured to receive a folding control instruction from a user, where the folding control instruction is used for controlling the electronic device to switch from a current configuration to a different configuration, e.g., switch to or from the folded configuration.

In some implementations, the connection mechanism includes a first connection portion and a second connection portion, where the first connection portion is accommodated in the first housing portion (which forms a first receiving chamber) of the first main body, and the second connection portion is accommodated in the second housing portion (which forms a second receiving chamber) of the second main body.

In some implementations, the motorized rotating-shaft assembly includes:
a power drive component;
a transmission component connected to the power drive component;
a first connection portion, connected to both the transmission component and the first main body; and
a second connection portion, connected to both the transmission component and the second main body.

In some implementations, at least one of the first connection portion or the second connection portion includes a bracket and a torsion component, where the torsion component is connected to the transmission component, one end of the bracket is movably connected to the torsion component, and the other end of the bracket is connected to the second main body or the first main body.

In some implementations, the transmission component includes a first gear set, a second gear set, and a transmission shaft.

The first gear set includes at least one gear. A first end of the first gear set is connected to the power drive component, a second end of the first gear set is connected to at least one of the first connection portion or the second connection portion, and a third end of the first gear set is connected to a first end of the transmission shaft.

The second gear set includes at least one gear. A first end of the second gear set is connected to at least one of the first connection portion or the second connection portion, and a second end of the second gear set is connected to a second end of the transmission shaft.

In some implementations, the electronic device further includes at least one of an angle detection module or a control module. The angle detection module is configured to detect an angle of the second main body or the first main body relative to the connection mechanism. The control module is configured to control a configuration or a rotation angle of at least one of the second main body or the first main body.

In some implementations, the connection mechanism further includes a curved housing. In the folded configuration, the curved housing is located between the first main body and the second main body and protrudes from the top of the first main body.

In some implementations, the housing of the first main body, which is also referred to as the host housing portion or first housing portion, includes a first region and a second region. A thickness of the second region is greater than that of the first region. The first region is disposed near the connection mechanism, that is, the first region is arranged between the second region and the connection mechanism.

In some implementations, the host housing portion includes a flat portion (e.g., the first region) and a protruding portion (e.g., the second region). The flat portion is coupled to the connection mechanism. The protruding portion protrudes from the flat portion, and has a thickness larger than that of the flat portion.

In some implementations, a thickness of the protruding portion measured perpendicular to the first surface substantially equals a combined thickness of the flat portion and the second main body (or camera housing portion). That is, a thickness of the protruding portion measured perpendicular to the first surface substantially equals a combined thickness of the flat portion and the second housing portion.

In some implementations, in the folded configuration, the second main body is at least partially overlapped with the first region, and a total thickness of the overlapped portion is the same as or similar to a thickness of the second region.

In some implementations, in the folded configuration, the electronic device exhibits a substantially uniform overall thickness.

In some implementations, the electronic device further includes a speaker module accommodated in the second region. The speaker module includes a speaker housing and a sound-generating component disposed in the speaker housing. At least one speaker outlet hole is provided on the speaker housing.

In some implementations, a surface area of the at least one speaker outlet hole is greater than 25 square millimeters.

In some implementations, a sound outlet array is disposed on a first surface of the second region near the at least one speaker outlet hole.

In some implementations, a button panel is disposed on a second surface of the second region. The button panel includes a first subregion and a second subregion, where the first subregion serves as a first button, and the second subregion serves as a second button.

In some implementations, the protruding portion further includes a plate covering at least a portion of the speaker housing and/or concealing one or more buttons disposed beneath the plate.

In some implementations, the plate defines a plurality of acoustic openings to facilitate acoustic output from the speaker module.

In some implementations, the plate is configured as an interactive input structure for the one or more buttons disposed beneath the plate.

In some implementations, the second region further includes a fixed shaft located between the first subregion and the second subregion. The button panel is rotatable around the fixed shaft, and when one of the first button and the second button is pressed, the other one is raised.

In some implementations, the plate is pivotably mounted to the protruding portion about a fixed shaft disposed between a first subregion and a second subregion of the plate.

In some implementations, rotation of the plate about the fixed shaft toward the first subregion depresses a first button of the one or more buttons disposed beneath the first subregion, while lifting the plate away from a second button of the one or more buttons disposed beneath the second subregion.

In some implementations, rotation of the plate about the fixed shaft toward the second subregion depresses the second button while lifting away from the first button.

In some implementations, the electronic device further includes a charging port at the bottom of the first main body.

In some implementations, the electronic device further includes at least one of a processor, a memory, a gyroscope, a matrix microphone module, or a wireless communication module.

In some implementations, the electronic device further includes a securing mechanism. The securing mechanism is detachably disposed on the first main body. A through hole for engaging with a lanyard is provided on the securing mechanism.

In some implementations, at least one light strip module is further disposed on the first surface of the second main body.

In some aspect, a connection mechanism is provided. The connection mechanism includes a power drive component, a transmission component, a first connection component (e.g., at least a part of a first connection portion), and a second connection component (e.g., at least a part of a second connection portion). The transmission component is connected to the power drive component. The first connection component is connected to the transmission component, and extends toward a first side of the transmission component (e.g., toward the first main body). The second connection component is connected to the transmission component, and extends toward a second side (e.g., toward the second main body) opposite to the first side. The power drive component is configured to actuate, via the transmission component, at least one of the first connection component or the second connection component to pivot.

In some implementations, the power drive component is configured to drive, via the transmission component, the first connection component and the second connection component to pivot synchronously in opposite directions.

In some implementations, the first connection component and/or the second connection component are configured to rotate within an angle range from 0° to 90°.

In some implementations, the transmission component includes at least one of a first transmission component or a second transmission component. The first transmission component is connected to the first connection component, and the second transmission component is connected to the second connection component. The power drive component is configured to actuate at least one of the first transmission component or the second transmission component to pivot.

In some implementations, the first transmission component is connected to the second transmission component, and the power drive component is connected to the first transmission component or the second transmission component.

In some implementations, the transmission component further includes at least one gear. The at least one gear is engaged with both the first transmission component and the second transmission component, and the power drive component is connected to the at least one gear.

In some implementations, at least one of the first transmission component or the second transmission component includes a gear portion and a torsion rod portion. The torsion rod portion is connected to the gear portion, and the torsion rod portion is movably connected to the first connection component or the second connection component.

In some implementations, the transmission component includes a first transmission portion, a synchronization rod (e.g., the transmission shaft), and a second transmission portion. Two ends of the synchronization rod are connected to the first transmission portion and the second transmission portion, respectively, and both the first transmission portion and the second transmission portion are connected to the power drive component.

In some implementations, at least one of the first transmission portion or the second transmission portion includes: a gear transmission mechanism (e.g., the first gear set and/or the second gear set) and at least one torsion rod transmission mechanism (e.g., the torsion component) connected to the gear transmission mechanism. The gear transmission mechanism is connected to the power drive component or the synchronization rod, and the torsion rod transmission mechanism is movably connected to the first connection component or the second connection component.

In some implementations, at least one of the first transmission portion or the second transmission portion includes at least two torsion rod transmission mechanisms. One of the at least two torsion rod transmission mechanisms is connected to the power drive component or the synchronization rod, and another of the at least two torsion rod transmission mechanisms is movably connected to the first connection component or the second connection component.

In some implementations, at least one end of the synchronization rod is sleeved with a shaft bushing.

In some implementations, the power drive component includes an output shaft connected to the transmission component, and the output shaft is sleeved with a shaft bushing.

In some implementations, the connection mechanism further includes a limiting component. The limiting component is movably connected to at least one of the first connection component or the second connection component, and is configured to limit the pivot motion of the movably connected first connection component and/or second connection component.

In some implementations, the first connection component and/or the second connection component includes a third limiting portion, and the limiting component includes a fourth limiting portion configured to slidably cooperate with the third limiting portion.

In some implementations, the limiting component includes a limiting bracket (e.g., the bracket) and a sliding component. The limiting bracket includes a first limiting portion. A first end of the sliding component includes a second limiting portion configured to slidably cooperate with the first limiting portion, and a second end of the sliding component is movably connected to the first connection component and/or the second connection component.

In some implementations, the limiting component further includes a support plate. The support plate is fixedly connected to the sliding component, and is configured to pivot together with the first connection component and/or the second connection component.

In some implementations, the power drive component includes a motor and a gearbox disposed on at least one side of the motor. The gearbox is connected to the transmission component via an output shaft.

In some implementations, the connection mechanism further includes a fixed housing. The power drive component and the transmission component are both fixedly connected to the fixed housing.

The present application also discloses an electronic device. The electronic device includes a first main body, a second main body, and the connection mechanism as described above. The first main body is connected to the first connection component, and the second main body is connected to the second connection component.

In some implementations, the second main body includes a first surface and at least one camera disposed on the first surface. The connection mechanism is configured to drive at least one of the first main body or the second main body to pivot, thereby physically exposing or shielding at least a part of the first surface.

The connection mechanism and the electronic device described above, by arranging the power drive component and configuring it to drive or actuate at least one of the first connection component or the second connection component to pivot via the transmission component, can automatically accomplish the unfolding or folding of the connection mechanism. This avoids frequent manual adjustments by the user, enhances ease of use, and is labor-saving and efficient.

In the electronic device based on the motorized rotating-shaft assembly of the present disclosure, the first main body is connected to the second main body via the connection mechanism, and the connection mechanism drives at least one of the second main body or the first main body to rotate, enabling the camera to rotate relative to the first main body. The shooting angle can be adjusted during use, which not only avoids frequent manual adjustment by the user and improves usability, but also makes the shooting content more flexible and comprehensive. Meanwhile, the first surface on which the camera is disposed can be concealed, enhancing privacy and security.

It should be understood that, the above general description and the following detailed description are merely exemplary and explanatory, and are not intended to limit the present disclosure.

### BRIEF DESCRIPTION OF DRAWINGS

The accompanying drawings are incorporated into and form part of the specification, showing embodiments consistent with the specification and are used in conjunction with the description to explain the present disclosure.
FIG. 1 is a diagram of an example of an electronic device based on a motorized rotating-shaft assembly in an unfolded configuration.
FIG. 2 is a diagram of the electronic device based on the motorized rotating-shaft assembly shown in FIG. 1 from another viewing angle.
FIG. 3 is an exploded view of an example of the electronic device based on the motorized rotating-shaft assembly.
FIG. 4 is a diagram of the electronic device based on the motorized rotating-shaft assembly in an intermediate configuration.
FIG. 5 is a diagram of the electronic device based on the motorized rotating-shaft assembly in a folded configuration.
FIG. 6 is an exploded diagram of a speaker module of the electronic device based on the motorized rotating-shaft assembly.
FIG. 7 is an exploded diagram of a first main body and a button panel of the electronic device based on the motorized rotating-shaft assembly.
FIG. 8 is a cross-sectional diagram of the electronic device along line A-A in FIG. 1.
FIG. 9 is a diagram of a connection mechanism according to an embodiment.
FIG. 10 is a diagram of some of components of the connection mechanism shown in FIG. 9.
FIG. 11 is another diagram of some of the components of the connection mechanism shown in FIG. 9.
FIG. 12 is a diagram of a connection mechanism according to another embodiment.
FIG. 13 is a diagram of the connection mechanism in FIG. 12 when some of components rotate.
FIG. 14 is a diagram of the connection mechanism in FIG. 12 when some of components unfold.
FIG. 15 is a diagram of some of the components in FIG. 14 from another perspective.
FIG. 16 is a cross-sectional view of the connection mechanism in FIG. 12 during rotation.
FIG. 17 is a diagram of a first transmission component in FIG.12.
FIG. 18 is a diagram of a power drive component in FIG.12.
FIG. 19 is a diagram of a first connection component in FIG.12.
FIG. 20 is a diagram of a limiting bracket in FIG.12.
FIG. 21 is a diagram of a sliding component in FIG.12.
FIG. 22 is another cross-sectional view of the connection mechanism in FIG. 12 during rotation.

Explanation of reference numerals:
10. first main body; 101. first region; 102. second region; 1021. sound outlet array; 11. first receiving chamber; 12. input module; 13. speaker module; 131. speaker housing; 1311. front speaker shell; 1312. rear speaker shell; 132. sound-generating component; 133. speaker outlet hole; 134. circuit board; 135. diaphragm; 14. button panel; 141. first subregion; 142. second subregion; 143. first button; 144. second button; 145. fixed shaft; 146. elastic component; 147. button lever; 148. membrane button; 15. matrix microphone module; 16. charging port; 20. second main body; 201. first surface; 202. second surface; 21. second receiving chamber; 22. camera; 23. display; 24. light strip module; 30. connection mechanism; 31. motorized rotating-shaft assembly; 32. power drive component; 321. motor; 322. gearbox; 323. first securing mechanism; 33. transmission component; 331. first gear set; 3311. driving gear; 3312. driven gear; 332. second gear set; 3321. first transmission gear; 3322. second transmission gear; 333. transmission shaft; 334. second securing mechanism; 34. second connection portion; 341. bracket; 3411. guide slot; 3412. positioning component; 342. torsion component; 343. connection rod; 35. first connection portion; 36. support component; 38. securing portion; 39. housing; 301. angle detection module; 40. charging base; 41. charging pin; 42. charging interface; 50. securing mechanism; 51. through hole; 810. power drive component; 811. motor; 812. gearbox; 813. output shaft; 8131. flat position structure; 814. power drive fixing component; 820. transmission component; 8201. gear portion; 8202. torsion rod portion; 821. first transmission component; 8211. first gear; 8212. first torsion rod; 822. second transmission component; 8221. second gear; 8222. second torsion rod; 823. at least one gear; 8231. third gear; 8232. fourth gear; 824. synchronous rod; 825. bushing; 826. first transmission portion; 827. second transmission portion; 828. gear transmission mechanism; 829. torsion rod transmission mechanism; 830. first connection component; 831. third limiting portion; 832. guide groove; 840. second connection component; 850. limiting component; 851. limiting bracket; 8511. first limiting portion; 852. sliding component; 8521. second limiting portion; 8522. fourth limiting portion; 853. support plate; 860. housing; 861. securing portion; 870. flexible display.

### DETAILED DESCRIPTION

The technical solutions in the embodiments of the present disclosure will be clearly and fully described below with reference to the accompany drawings. In the following description referring to the drawings, the same numerals in different drawings represent the same or similar elements unless otherwise indicated.

If the embodiments of the present disclosure include terms related to directional indications or positional relationships, such as upper, lower, left, right, front, rear, inner, outer, top, bottom, center, vertical, horizontal, longitudinal, transverse, length, width, counterclockwise, clockwise, axial, radial, circumferential and the like, such terms are used only to explain the relative positional relationships or movements of components in a specific orientation (as shown in the drawings). If the specific orientation changes, these directional indications or positional relationships change accordingly. In addition, terms such as "first", "second" and the like are used solely for convenience of description and should not be understood as indicating or implying relative importance.

The embodiments of the present disclosure will be described in detail below.

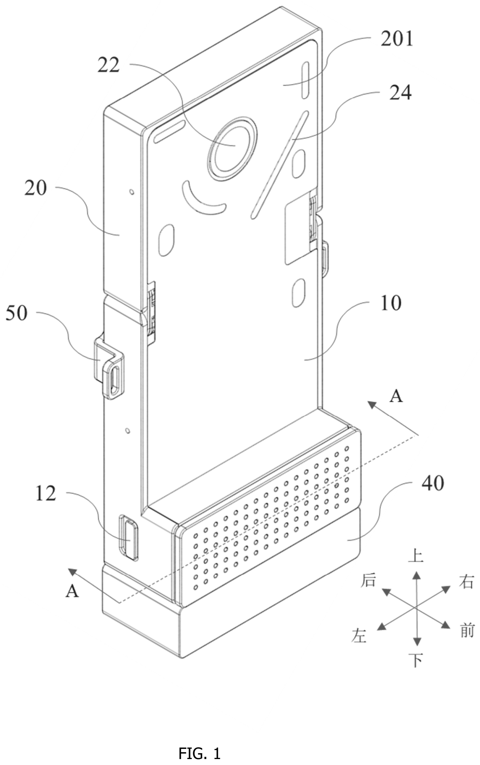

As shown in FIGs. 1 to 3, the present disclosure provides an electronic device based on a motorized rotating-shaft assembly, including a first main body 10, a second main body 20, and a connection mechanism 30. The first main body 10 and the second main body 20 are connected via the connection mechanism 30. The electronic device may include, for example, a foldable camera device.

A housing of the first main body 10 (i.e., a first housing portion) has a first receiving chamber 11, a housing of the second main body 20 (i.e., a second housing portion) has a second receiving chamber 21, and two sides of the connection mechanism 30 are respectively accommodated in the first receiving chamber 11 and the second receiving chamber 21. This arrangement allows the electronic device to have a more compact structure, saving space and improving portability. Moreover, by arranging the connection mechanism 30 within the cavities of the electronic device, the overall appearance of the electronic device is more streamlined and concise, enhancing coordination and aesthetic appeal.

The second main body 20 includes a first surface 201, which refers as the front surface of the second main body 20 in the drawings as an example, and at least one camera 22 disposed on the first surface 201. This allows the electronic device to realize functions such as taking photos and recording videos. For simplicity, the description below is made by taking one camera 22 as an example, but the number of cameras 22 may be two or more, which is not limited in the embodiments of the present disclosure.

The connection mechanism 30 includes a motorized rotating-shaft assembly 31, which is configured to drive at least one of the second main body 20 or the first main body 10 to rotate, thereby exposing or covering the first surface 201. The motorized rotating-shaft assembly 31 is configured to automatically change an angle or a folding angle between the second main body 20 and the first main body 10, thereby adjusting a shooting angle of the camera 22.

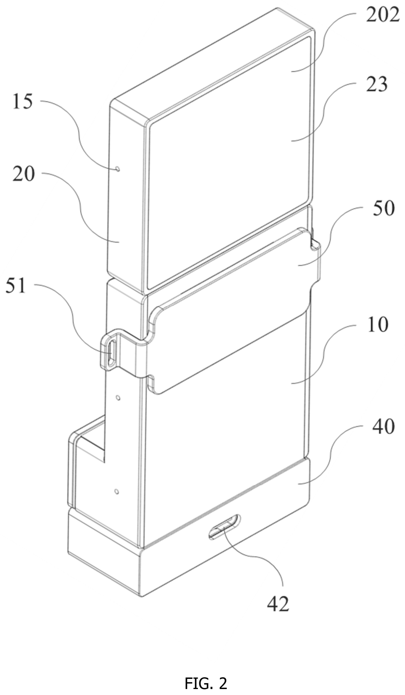

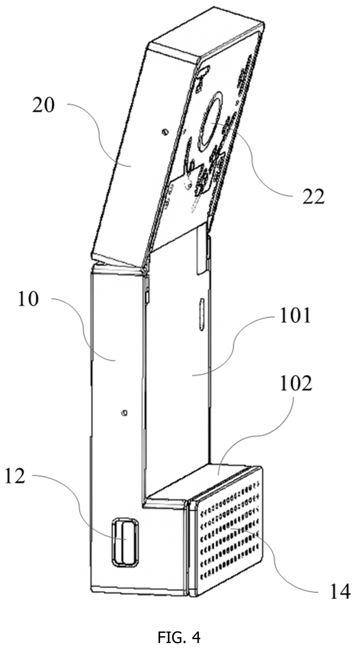

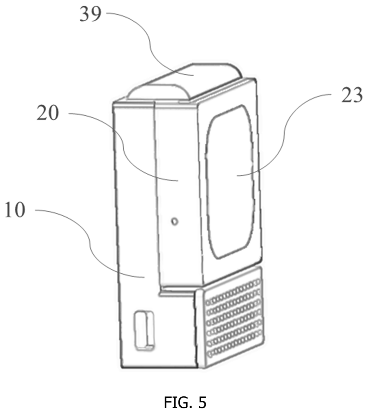

In some embodiments, the electronic device has an unfolded configuration, a folded configuration, and an intermediate configuration. In the unfolded configuration, as shown in the examples in FIGs. 1 and 2, the angle between the second main body 20 and the first main body 10 is 180°. In the intermediate configuration, as shown in the example in FIG. 4, the angle between the second main body 20 and the first main body 10 is greater than 0° and less than 180°. In the folded configuration, as shown in the example in FIG. 5, the angle between the second main body 20 and the first main body 10 is 0°.

In some other embodiments, the electronic device has an unfolded configuration and a folded configuration. In the folded configuration, the angle between the second main body 20 and the first main body 10 is substantially 0°, and the first main body 10 overlies at least a part of the first surface to physically occlude the at least one camera. In the unfolded configuration, the angle between the first main body 10 and the second main body 20 is larger than 0°, that is, the unfolded configuration is a configuration other than the folded configuration, and at least a part of the at least one camera does not contact the first main body 10 or is exposed.

As shown in FIG. 5, in some embodiments, the connection mechanism 30 includes a housing 39 with a curved surface. Optionally, in the folded configuration, the housing 39 is located between the first main body 10 and the second main body 20 and protrudes from the top of the first main body 10. This allows the housing 39 to conceal and protect the internal components of the connection mechanism 30, improving the aesthetic appeal and reliability of the electronic device. Optionally, in the unfolded configuration, the housing 39 is accommodated within the housing of the first main body 10 (i.e., the first housing portion) and/or the housing of the second main body 20 (i.e., the second housing portion) to improve the overall appearance consistency of the electronic device.

During the transition of the electronic device from the unfolded configuration or the intermediate configuration to the folded configuration, the first surface 201 gradually approaches to the first main body 10. In the folded configuration, the first surface 201 is in contact with or overlies at least a part of the first main body 10. In this way, the camera 22 located on the first surface is concealed by the first main body 10 in the folded configuration, achieving privacy protection by means of physical concealing enhancing security. Additionally, it can effectively prevent physical impacts and scratches of the camera 22, reducing the possibility of damage to the electronic device and prolonging its lifespan. In some implementations, in the folded configuration, the electronic device has a compact structure, making it easy to carry and store.

In some embodiments, the electronic device, driven by the motorized rotating-shaft assembly 31, allows the second main body 20 to rotate automatically relative to the first main body 10 with an included range between is 0° to 180°, thereby realizing the transition of the electronic device between different configurations, improving the shooting effect of the camera 22, and allowing flexible use in different scenarios to meet the diverse needs of users.

In some embodiments, the motorized rotating-shaft assembly 31 is configured to drive the second main body 20 to rotate while the first main body 10 remains stationary. In this case, an rotation angle range of the second main body 20 driven by the motorized rotating-shaft assembly 31 may be between 0° and 180°. In some other embodiments, the motorized rotating-shaft assembly 31 is configured to drive the first main body 10 to rotate while the second main body 20 remains stationary. In some other embodiments, the motorized rotating-shaft assembly 31 is configured to drive the first main body 10 and the second main body 20 to rotate synchronously. For example, the second main body 20 and the first main body 10 may rotate synchronously in opposite directions, and the rotation angles of the first main body 10 and the second main body 20 during synchronous or coordinated rotation may be the same or different, thereby improving transmission efficiency and making the change of shooting angle more flexible.

In some embodiments, the electronic device further includes a control module (not shown in the drawings) configured to control the rotation angle of the second main body 20 and/or the first main body 10. The control module may be software-based and/or hardwarebased, such as a controller, a processor, a programmable logic circuit, an application-specific integrated circuit, a control circuit or the like. The control module may be configured to control the rotation angle of the second main body 20 and/or the first main body 10 based on one or more types of information.

In some embodiments, the control module may be configured to make one or more determinations based on information of one or more images collected by the camera 22. For example, the control module may be configured to determine the rotation angle of the second main body 20 and/or the first main body 10 or determine a desired angle between the second main body 20 and the first main body 10. The control module may be further configured to control the motorized rotating-shaft assembly 31 to drive the second main body 20 and/or the first main body 10 to rotate. For example, image recognition processing may be performed on one or more images collected by the camera 22 to obtain an image recognition result, and the desired angle between the second main body 20 and the first main body 10 may be determined based on the image recognition result. The image recognition result may include whether the image contains a target object or a specific type of object, whether the contained object is complete, the current shooting scene, and/or the like.

In some other embodiments, the electronic device further includes an angle detection module 301 configured to detect an angle of the second main body 20 and/or the first main body 10 relative to the connection mechanism 30. The angle detection module 301 may include a Hall sensor and/or other components. In this case, optionally, the control module may be configured to determine the rotation angle of the second main body 20 and/or the first main body 10 based on the detection result of the angle detection module 301. For example, the control module is configured to control the motorized rotating-shaft assembly 31 to drive the second main body 20 and/or the first main body 10 to rotate according to a difference between the current angle and the desired angle between the second main body 20 and the first main body 10. The desired angle may be determined according to one or more of a user instruction, the current shooting scene, or the information of one or more images collected by the camera 22, etc., which is not limited herein. In this way, the rotation of the second main body 20 and/or the first main body 10 is controlled by the control module to adjust the shooting angle of the camera 22, thereby achieving the best shooting or recognition effect.

In some embodiments, the electronic device may be configured for user activity recording or assisting with health management of the user. For example, if it is recognized that an image collected by the camera 22 contains food, the calories and/or ingredients of the recognized food may be determined and recorded, which is beneficial to provide the user with health information such as food intake calories and/or nutritional analysis. Optionally, an alert or reminder may be provided if it is determined that a specific ingredient, such as an allergenic ingredient (e.g., soy, milk, etc.) or forbidden ingredient (e.g., spicy, seafood, etc.), which may be preset or input by the user, is contained in the food, or that calories or nutrition of the food does not satisfy a certain condition.

In some embodiments, the electronic device may include a processor configured to perform at least part of the above mentioned image processing, angle recognition, and/or other types of processing. For example, the processor may be configured to process the image collected by the camera 22, so as to determine whether the image contains food, or determine whether the object contained in the image is complete. For another example, the processor may be configured to process one or more signals collected by the angle detection module 301 to obtain the current angle between the second main body 20 and the first main body 10. For another example, the processor may be configured to process one or more user operations received by the electronic device to obtain user instructions corresponding to the user operations. The processor may include a microprocessor or the like. The implementation of the processor is not limited herein.

In some embodiments, at least one processor is configured to, in response to detecting, based on image data captured by the at least one camera, an object of interest, actuate the power drive component to rotate at least one of the first housing portion or the second housing portion about the folding axis so as to orient an optical axis of the at least one camera toward the object of interest.

In some embodiments, the at least one processor is configured to determine a rotation angle of at least one of the first housing portion or the second housing portion relative to the connection mechanism and to actuate the motorized rotating-shaft assembly to position at least one of the first housing portion or the second housing portion at a desired angle about the folding axis.

In some embodiments, the at least one processor is configured to, in response to determining that the at least one camera is physically occluded in the folded configuration, disable image capture by the at least one camera.

In some embodiments, the electronic device further includes a wireless communication module configured to communicate with other electronic devices, e.g., to exchange information with a terminal device (such as a wearable device or a client device like a mobile phone) or a server. In some embodiments, any processing procedure involved in the embodiments of the present disclosure may be implemented via a cooperation of the processor and other electronic devices, or implemented independently by other electronic devices. For example, the electronic device may transmit information associated with the image captured by the camera 22 to a terminal device or a server through the wireless communication module, and the terminal device or the server processes the received information associated with the image to obtain an image recognition result, or obtain associated food calories.

In some other examples, the electronic device may transmit food intake information (such as at least one of food images, food recognition results, or food calories) to a terminal device or a server, and the terminal device or the server obtains a summary or suggestion for the user's food intake over a certain time period based on the food intake information, such as, for instance, whether the user's food intake calories in a given day exceed a reference or expected value, whether the user's food intake in a given day or week meets a reference nutritional standard, and/or the like.

In some embodiments, the terminal device or the server may acquire exercise data of the user, and obtain a health result or recommendation for the user over a specific time period based on the exercise data and food intake data of the user. For example, a difference between the food intake calories and exercise consumption calories of the user for a given day is obtained, and whether the difference meets the user's health goal or reference standard is determined. For another example, current food intake calories of the user for a given day is determined, and remaining allowance of food intake calories for the day is determined according to a gap between the current food intake calories and expected food intake calories of the day. For another example, calories of the currently photographed food are compared with expected food calories to determine whether the currently photographed food meets the calorie control goal. If it is determined that the calories of the currently photographed food exceed the calorie control goal, based on the excess calories, exercise suggestions may be provided to the user for consuming the excess calories.

In some other embodiments, through cooperating with a terminal device or a server, the electronic device may provide the user with at least one of a nutritional reference, a dietary suggestion, an exercise suggestion, a dietary plan, or a workout plan for a period of time based on at least one of personal information, a health goal, a dietary pattern, historical dietary data, an exercise pattern or historical exercise data of the user. In this way, the electronic device may cooperate with other electronic devices to provide suggestions for the dietary health of the user and serving as a portable health assistant for the user.

In some embodiments, the electronic device further includes an input module 12. In some examples, the input module 12 is disposed on the first main body 10, e.g., disposed within the housing of the first main body 10 (i.e., the first housing portion), and is configured to receive a folding control instruction from the user. The folding control instruction is used for controlling the electronic device to switch to the folded configuration. The input module 12 may be implemented in various ways. In some embodiments, the input module 12 may be a button, a knob, a touch-sensitive device, or other interactive components. In some other embodiments, the input module 12 may include a slot and a torsion component disposed within the slot. The user can send a folding control instruction or an unfolding control instruction by changing the position of the torsion component in the slot, such as by rotating the torsion component. In some other embodiments, the user may send a folding control instruction or an unfolding control instruction in other manners, such as a voice command, a gesture command, or an action command, which is not limited herein.

In this way, in some embodiments, in the unfolded configuration or the intermediate configuration, the user may send a folding control instruction through the input module 12. In response to the folding control instruction, the input module 12 may be configured to control the motorized rotating-shaft assembly 31 to drive the second main body 20 and/or the first main body 10 to rotate to the folded configuration, realizing one-click transition of the electronic device to the folded configuration.

In some other embodiments, if the electronic device is in the folded configuration or the intermediate configuration, the user may send an unfolding control instruction by operating the input module 12, and the control module may respond to the unfolding control instruction and control the motorized rotating-shaft assembly 31 to drive the second main body 20 and/or the first main body 10 to rotate, so that the electronic device is switched to the unfolded configuration, realizing one-click transition to the unfolded configuration. In some embodiments, in responsive to the electronic device switching to the unfolded configuration, the camera 22 may be automatically turned on, which is not limited herein.

Therefore, on one hand, the electronic device can automatically switch between different configurations with the cooperation of the camera 22 and the control module. On the other hand, the electronic device can be manually controlled to switch between different configurations through the input module 12, allowing the electronic device to adapt flexibly to different scenarios, improving usability and enhance interactive experience.

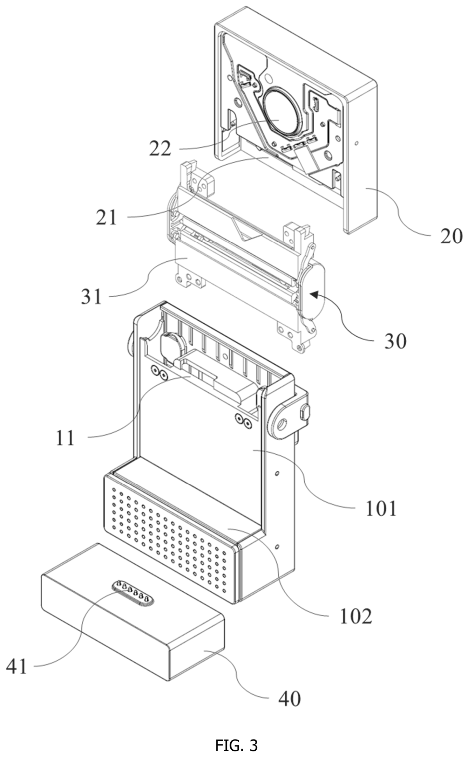

Referring to FIG. 3, in some embodiments, the housing of the first main body 10 (i.e., the first housing portion) includes a first region 101 (i.e., a flat portion) and a second region 102 (i.e., a protruding portion), and a thickness of the second region 102 is greater than that of the first region 101. The first region 101 is disposed close to (e.g., coupled to) the second main body 20 and located at the upper part of the first main body 10. The second region 102 is disposed away from the second main body 20 and located at the lower part of the first main body 10. In some examples, the first region 101 and the second region 102 may be arranged along the length direction of the first surface of the first main body 10, and both occupy the entire area along the width direction of the first surface of the first main body 10, but this is not limited in the embodiments of the present disclosure. Optionally, the first region 101 is connected to the second main body 20 via the connection mechanism 30. The second region 102 and the second main body 20 are located on two sides of the first region 101.

In some embodiments, if the electronic device is in the folded configuration, the second main body 20 may overlap with (e.g., overlie) at least a part of the first region 101, causing at least a part of the camera 22 to be concealed by the first region 101. In this way, by setting the first region 101 to have a relatively small thickness, space is provided for placing the second main body 20 when the electronic device is in the folded configuration, thereby reducing the overall thickness of the electronic device in the folded configuration. Meanwhile, by setting the second region 102 to have a relatively large thickness, more accommodation space is provided for internal electronic modules, which is beneficial to the miniaturization and slim design of the device.

In some embodiments, a cross-sectional area of the first region 101 is larger than that of the second region 102, which is beneficial to better accommodate the second main body and improve the visual thinness of the device in the folded configuration. In some examples, the cross-sectional area of the first region 101 is much larger than that of the second region 102. A difference between the cross-sectional area of the first region 101 and the cross-sectional area of the second region 102 may be greater than a threshold. For instance, the cross-sectional area of the first region 101 is two times, 2.5 times, three times, or more than that of the second region 102, which is not limited herein.

Referring to FIG. 5, in some embodiments, in the folded configuration, the total thickness of the overlapped portion of the second main body 20 and the first region 101 is substantially the same as the thickness of the second region 102. In this way, in the folded configuration, the electronic device exhibits a substantially uniform overall thickness, giving the electronic device a relatively smooth and streamlined appearance. In some embodiments, the thickness of the first region 101 is the same as or similar to that of the second main body 20, which is not limited herein. In addition, in some embodiments, the cross-sectional area of the first region 101 may be equal to or slightly larger than the cross-sectional area of the first surface of the second main body 20, so as to improve the visual integrity of the device in the folded configuration.

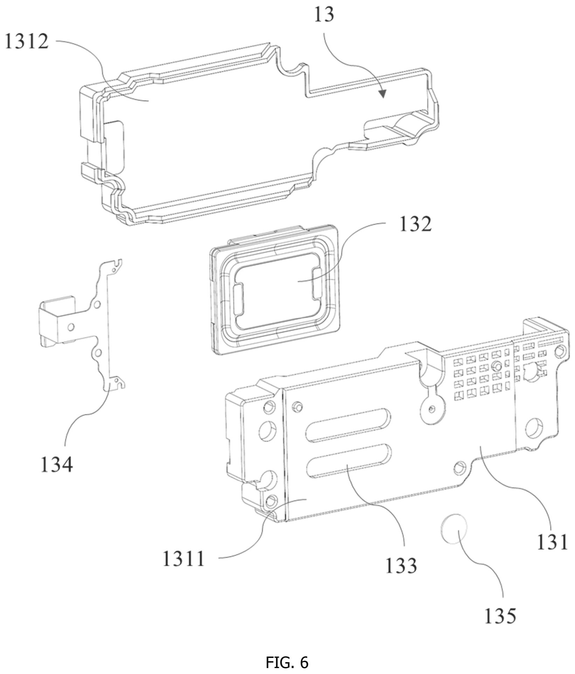

In some embodiments, one or more electronic components may be disposed within the second region 102. Referring to FIG. 6, the electronic device further includes a speaker module 13 disposed within the second region 102. The speaker module 13 includes a speaker housing 131, a sound-generating component 132, speaker outlet holes 133, a circuit board 134 and a diaphragm 135.

The speaker housing 131 may include a front speaker shell 1311 and a rear speaker shell 1312. Both the front speaker shell 1311 and the rear speaker shell 1312 may be made from plastic material, and they are fixedly connected to each other to provide an acoustic chamber volume for the sound-generating component 132. The speaker module 13 may be secured within the housing of the first main body 10 (i.e., the first housing portion) via the speaker housing 131. For example, at least one of the front speaker shell 1311 or the rear speaker shell 1312 is secured to the housing of the first main body 10 (i.e., the first housing portion) via bolts.

The speaker housing 131 includes at least one speaker outlet hole 133. In some embodiments, the speaker housing 131 has a plurality of speaker outlet holes 133, and a total area of the plurality of speaker outlet holes 133 is greater than a certain value, such as, for example, greater than 25 square millimeters, to improve the performance of the speaker module 13. In the example shown in FIG. 6, the at least one speaker outlet hole 133 is provided on the front speaker shell 1311, and the number of the at least one speaker outlet hole 133 shown in the FIG. 6 is two, but this is not limited in the embodiments of the present disclosure.

In addition, as shown in FIG. 6, a diaphragm 135 is disposed on the speaker housing 131 to maintain the air pressure balance between interior and exterior of the speaker housing 131 and prevent sound distortion, thereby providing a better auditory experience.

In some embodiments, the sound-generating component 132 is mounted on the circuit board 134 in the speaker housing 131. The circuit board 134 may be a flexible printed circuit (FPC), but this is not limited in the embodiments of the present disclosure.

The speaker module 13 is configured as an independent unit within the first main body 10, enhancing audio and optimizing the audio interaction capabilities of the electronic device.

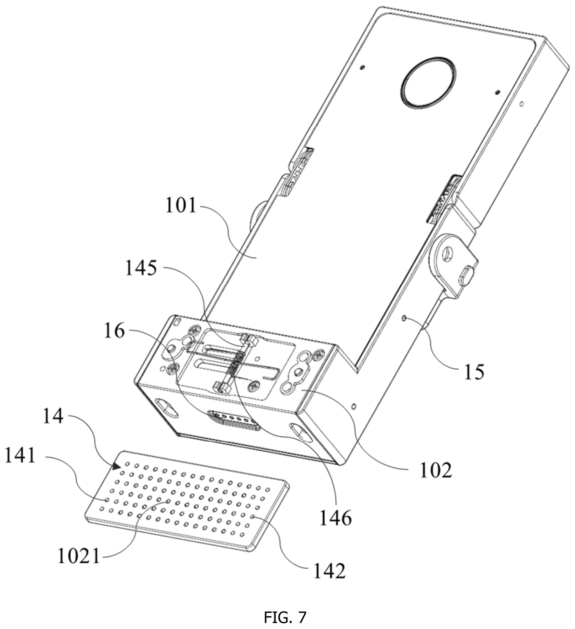

In some embodiments, the second region 102 of the housing includes a sound outlet array 1021 to allow the sound emitted by the speaker module 13 to pass through the housing. Optionally, the coverage range of the sound outlet array 1021 may be larger than that of at least one speaker outlet hole 133 to improve the sound output effect. In the example shown in FIG. 7, the sound outlet array 1021 may be disposed on the first surface of the first housing portion. In this way, the sound outlet array 1021 is arranged on the front shell of the first main body 10, and substantially covers most or the entire area of the first surface, but this is not limited in the embodiments of the present disclosure.

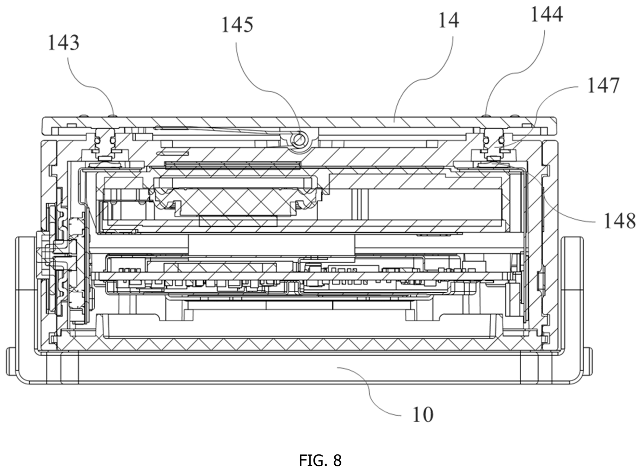

Referring to FIGs. 7 and 8, in some embodiments, a button panel 14 (e.g., a plate) is disposed in the second region 102 of the first housing portion. The button panel 14 includes a first subregion 141 and a second subregion 142. In some examples, the button panel 14 covers at least a portion of the speaker module 13 (e.g., speaker housing 131). Optionally, the sound outlet array 1021 may be disposed on the button panel 14. The button panel 14 may define a plurality of acoustic openings to facilitate acoustic output from the speaker module 13. In some examples, the button panel 14 is further configured as an interactive input structure. For example, the first subregion 141 may include or serve as a first button 143, and the second subregion 142 may include or serve as a second button 144, allowing the user to interact with the electronic device by pressing the buttons. In some examples, the button panel 14 may cover one or more buttons (e.g., the first button 143 and the second button 144) disposed beneath it. In this way, the button panel 14 is used to realize both the sound output and the user interaction, which can reduce hardware cost of the device and reduce the size of the electronic device.

In some examples, the first subregion 141 and the second subregion 142 may occupy most or the entire cross-section of the button panel 14, thereby increasing the operational area for button control and improving the user experience when pressing the buttons.

In some examples, the button panel 14 is pivotably mounted to the second region about a fixed shaft disposed between the first subregion and the second subregion of the button panel 14, such that rotation of the button panel 14 about the fixed shaft toward the first subregion depresses the first button disposed beneath the first subregion, while lifting the button panel 14 away from the second button disposed beneath the second subregion. Similarly, rotation of the button panel 14 about the fixed shaft toward the second subregion may depress the second button while lifting the button panel 14 away from the first button.

The first button 143 and the second button 144 may be implemented in various ways. In some embodiments, the second region 102 of the first housing portion further includes a fixed shaft 145. One side of the fixed shaft 145 is secured to the housing of the first main body 10 (i.e., the first housing portion), and the other side is connected to the button panel 14. In the example shown in FIG. 7, the fixed shaft 145 is fitted with an elastic component 146, with the button panel 14 abutting against the elastic component 146, but this is not limited in the embodiments of the present disclosure.

In some embodiments, the button panel 14 is divided into the first subregion 141 and the second subregion 142 by the fixed shaft 145. The button panel 14 is capable of rotating around the fixed shaft 145, so that when one of the first button 143 and the second button 144 is pressed, the other one tilts up, thereby realizing a seesaw-type button mechanism. In some embodiments, the first button 143 and the second button 144 may have pressing bumps to provide good tactile feedback and improve button recognition.

In some embodiments, a press detection module is disposed within the first housing portion. The press detection module is movably connected to the button panel 14 and configured to detect the user's pressing operation on the button panel 14. In the example shown in FIG. 8, the press detection module includes at least two button levers 147, a membrane button 148, and a sensor (not shown). The at least two button levers 147 are movably arranged in the housing of the first main body 10 (i.e., the first housing portion), and the membrane button 148 and the sensor are mounted on the circuit board within the first housing portion. The at least two button levers 147 may be respectively associated with the first subregion 141 and the second subregion 142. When the user does not press the button panel 14, the at least two button levers 147 are in a free configuration, with two ends either close to and spaced from the button panel 14 and the membrane button 148, or in contact with the button panel 14 and the membrane button 148 without any interactive force. When the user presses either the first button 143 or the second button 144, the pressed button abuts against and presses down the button lever 147 in the corresponding region. The button lever 147 in the corresponding region moves downward and abuts against the membrane button 148. The sensor detects the force applied to the membrane button 148 or other parameters to achieve pressure detection.

In some embodiments, at least one opening is disposed in the housing of the first main body 10 (i.e., the first housing portion), at positions corresponding to the first subregion 141 and the second subregion 142. One end of the button lever 147 is positioned within the housing of the first main body 10 (i.e., the first housing portion), and the other end extends out of the housing through the opening. In addition, the button lever 147 may be movably connected to the housing of the first main body 10 (i.e., the first housing portion). In an example, the button lever 147 includes at least one limiting groove, and the housing of the first main body 10 (i.e., the first housing portion) includes at least one limiting post. One end of the limiting post is fixedly secured in the housing of the first main body 10 (i.e., the first housing portion), and the other end is disposed within the limiting groove and is capable of moving up and down within the limiting groove. The implementations and fixing methods of the button lever 147 are not limited in the embodiments of the present disclosure.

In some embodiments, the electronic device further includes at least one matrix microphone module 15. The at least one matrix microphone module 15 is configured to receive voice input from the user. Optionally, the at least one processor of the electronic device may be configured to process the received voice input, perform voice recognition and respond based on the voice recognition result. Optionally, the electronic device may transmit the voice input to other electronic devices (such as a terminal device or a server) via the wireless communication module, so that the other electronic devices process the voice input, perform voice recognition and return the voice recognition result. Correspondingly, the electronic device may respond based on the received voice recognition result. Alternatively, the terminal device or the server may return a response based on the voice recognition result, and the electronic device outputs the response to the user, such as by displaying it on the display or the like. In this way, the matrix microphone module 15 cooperates with the speaker module 13 to realize voice interaction. In some embodiments, the at least one matrix microphone module 15 includes a plurality of matrix microphone modules, which are distributed on the same side of the housing of the first main body 10 (i.e., the first housing portion), but the embodiments of the present disclosure is not limited thereto.

Referring to FIGs. 2 and 5, in some embodiments, the electronic device further includes a display 23, which is configured to display images captured by the camera 22, output responses to user inputs, or output content sent from other electronic devices, which is not limited in the embodiments of the present disclosure. In some embodiments, the display 23 may be arranged on the second surface 202 of the second main body 20, where the second surface 202 is opposite to the first surface 201. In the example shown in the drawings, the second surface 202 is the rear surface of the second main body 20. In some embodiments, the display 23 may be a touch screen, but this is not limited in the embodiments of the present disclosure.

In some embodiments, at least one light strip module 24 is provided on the first surface 201 of the second main body 20. The at least one light strip module 24 may be configured to send prompt information, provide supplemental lighting, and/or serve as an ambient light. In some examples, the at least one light strip module 24 may be configured to indicate the current battery level of the electronic device, provide an alert when the battery is low or when the food calories exceed a threshold or the like, notify of incoming calls of an associated terminal device, provide message reminders, or provide task reminders, etc. In some other examples, the light strip module 24 may serve as a supplementary lighting in a dark or low-light environment, thus meeting the user's needs for shooting in such conditions. In some other examples, the light strip module 24 may serve as an ambient lighting to increase the futuristic feel of the device.

In some examples, the electronic device may automatically control the activation or deactivation of the light strip module 24. For example, if the electronic device determines that the brightness of the image captured by the camera 22 is lower than a specific threshold, at least part of the at least one light strip module 24 is controlled to be activated. In some other examples, the user may send a light strip control instruction to control the activation or deactivation of the light strip module 24, or adjust the illumination brightness of the light strip module 24. The user may send the light strip control instruction via the display 23, the first button 143, the second button 144, or other means, which is not limited in the embodiments of the present disclosure. Optionally, the surface of the light strip module 24 is covered with a PCI membrane, which effectively prevents external factors from physically damaging or chemically eroding the light strip module 24, thereby enhancing the durability of the light strip module 24.

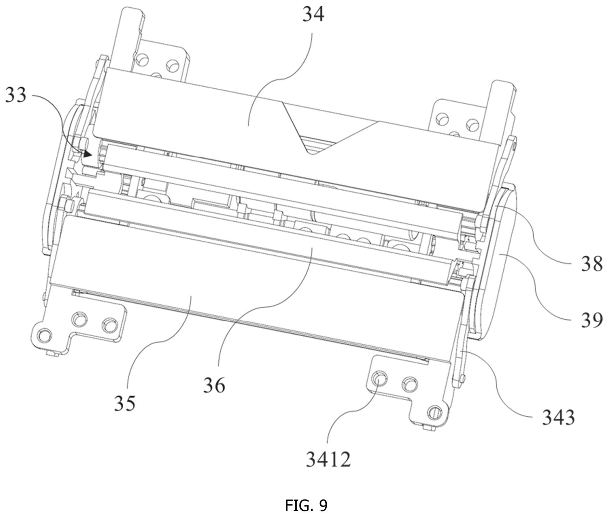

The implementations of the motorized rotating-shaft assembly 31 are described in detail below with reference to FIGs. 9 to 11.

In some embodiments, the motorized rotating-shaft assembly 31 includes a securing portion 38, a power drive component 32, a transmission component 33, as well as a second connection portion 34 and/or a first connection portion 35.

The securing portion 38 is disposed within of the housing 39. The securing portion 38 may be configured to support and secure the motorized rotating-shaft assembly 31. Both the power drive component 32 and the transmission component 33 are fixedly secured to the securing portion 38.

The power drive component 32 is connected to the transmission component 33 to provide power output for the transmission component 33. The transmission component 33 is further connected to at least one of the first connection portion 35 or the second connection portion 34. The transmission component 33 is configured to transmit power to at least one of the first connection portion 35 and the second connection portion 34. The second connection portion 34 is further coupled to the second main body 20, and the movement of the second connection portion 34 drives the second main body 20 to rotate. The first connection portion 35 is further coupled to the first main body 10, and the movement of the first connection portion 35 drives the first main body 10 to rotate.

In some embodiments, the power drive component 32 includes a motor 321, a gearbox 322, and a first securing mechanism 323. Optionally, the gearbox 322 includes a plurality of planetary gear sets for increasing torque, and the first securing mechanism 323 secures the power drive component 32 to the securing portion 38.

In some embodiments, the transmission component 33 includes a first gear set 331, a second gear set 332, a transmission shaft 333, and a second securing mechanism 334. The first gear set 331 is connected to at least one of the first connection portion 35 or the second connection portion 34. The first gear set 331 is further connected to the power drive component 32 and one end of the transmission shaft 333. The second gear set 332 is connected to at least one of the first connection portion 35 or the second connection portion 34. The second gear set 332 is connected to the other end of the transmission shaft 333. The second securing mechanism 334 is secured to the housing 39 via bolts.

In this way, the first gear set 331 transmits the power output from the power drive component 32 to the second gear set 332 through the transmission shaft 333, causing the first connection portion 35 and/or the second connection portion 34 coupled to the first gear set 331 and the second gear set 332 to move, thereby driving the second main body 20 connected to the second connection portion 34 and/or the first main body 10 connected to the first connection portion 35 to rotate.

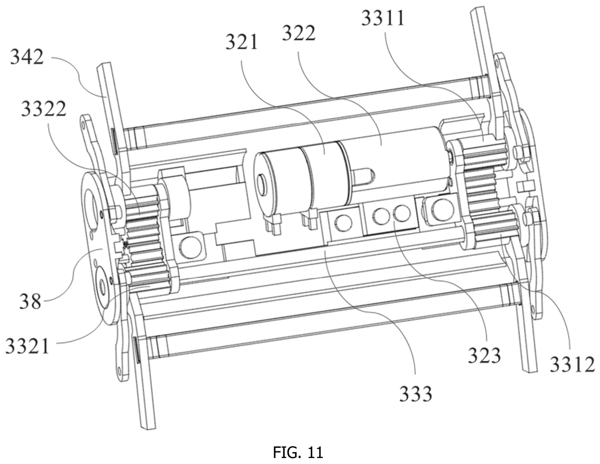

The first gear set 331 includes at least one gear. As shown in FIG. 11, in some embodiments, the first gear set 331 includes an engaging driving gear 3311 and a driven gear 3312. The driving gear 3311 is connected to the second connection portion 34 and the power drive component 32, while the driven gear 3312 is connected to the first connection portion 35 and the transmission shaft 333. In some other embodiments, the first gear set 331 includes two or more driven gears 3312 engaging with the driving gear 3311. In this case, the driving gear 3311 is connected to the power drive component 32. The two or more driven gears 3312 are connected to the transmission shaft 333, the second connection portion 34, and the first connection portion 35.

The second gear set 332 includes at least one gear. As shown in FIG. 11, in some embodiments, the second gear set 332 includes a first transmission gear 3321 and a second transmission gear 3322 engaging with each other. The first transmission gear 3321 is connected to both the first connection portion 35 and the transmission shaft 333. The second transmission gear 3322 is connected to the second connection portion 34.

In this way, the power drive component 32 drives the driving gear 3311 of the first gear set 331 to rotate, and the rotation of the driving gear 3311 drives the engaged driven gear 3312 to rotate. The rotation of the driven gear 3312 drives the transmission shaft 333 to rotate, and the transmission shaft 333 transmits the torque from the driven gear 3312 to the first transmission gear 3321, which in turn drives the first transmission gear 3321 connected to the other end of the transmission shaft 333 to rotate. The rotation of the first transmission gear 3321 drives the engaged second transmission gear 3322 to rotate. In this way, the synchronous rotation of the first gear set 331 and the second gear set 332 is realized, thereby driving the first connection portion 35 and the second connection portion 34 connected to the first gear set 331 and the second gear set 332 to move.

In some embodiments, at least part of the first connection portion 35 is accommodated in the first receiving chamber 11 in the first housing portion. Similarly, at least part of the second connection portion 34 is accommodated in the second receiving chamber 21 in the second housing portion. In this way, the space occupied by the electronic device is reduced, which is not limited in the embodiments of the present disclosure.

The structure of the second connection portion 34 may be the same as or different from that of the first connection portion 35. Optionally, at least one of the first connection portion 35 or the second connection portion 34 includes a bracket and a torsion component movably connected to the bracket. One end of the torsion component is connected to the transmission component 33, and the other end is connected to the bracket. In some examples, a sliding groove may be disposed on the bracket, and the torsion component is capable of sliding within the sliding groove. In some other examples, the torsion component may drive the bracket to rotate. Alternatively, the torsion component is capable of sliding relative to the bracket and driving the bracket to rotate, etc., which is not limited in the embodiments of the present disclosure. The bracket is further connected to the second main body 20 or the first main body 10. In this way, the torsion component moves under the drive of the transmission component 33, and the movement of the torsion component drives the bracket to rotate, thereby in turn drives the second main body 20 or the first main body 10 connected to the bracket to rotate. In some examples, the motorized rotating-shaft assembly is configured to drive a first bracket and a second bracket disposed on opposite sides of the folding axis through a shaft extending between and operatively coupling the first bracket and the second bracket.

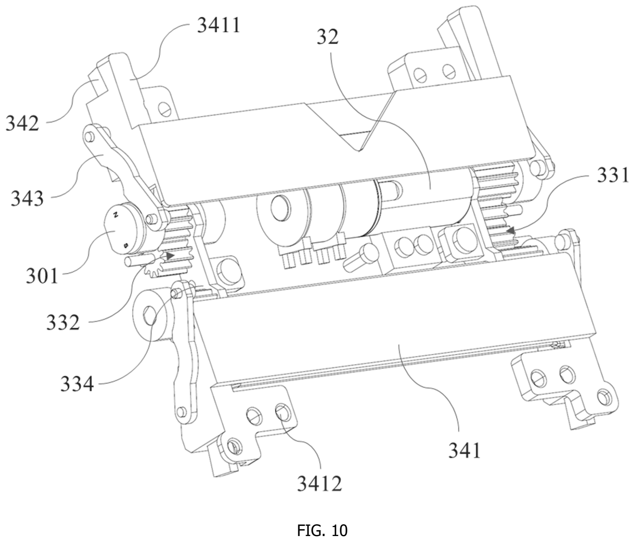

As shown in FIG. 10, in some embodiments, at least one of the first connection portion 35 or the second connection portion 34 includes a bracket 341, a torsion component 342, and a connecting rod 343.

The torsion component 342 is connected to the transmission component 33 and rotates under the drive of the transmission component 33, which in turn drives the bracket 341 to rotate. For example, the torsion component 342 is connected to at least one of the first gear set 331 or the second gear set 332, and rotates under the drive of at least one of the first gear set 331 or the second gear set 332. In the example shown in FIG. 10, the torsion component 342 includes a pair of sliding rods and a connecting rod. The sliding rods are arranged on both sides of the transmission shaft 333 and perpendicular to the transmission shaft 333. The sliding rods may be connected to each other via the connecting rod.

In some examples, one of the sliding rods is fixedly connected to the driving gear 3311 and rotate with the rotation of the driving gear 3311, while the other one is fixedly connected to the second transmission gear 3322 and rotates with the rotation of the second transmission gear 3322. In some other examples, one of the sliding rods is fixedly connected to the driven gear 3312 and rotate with the rotation of the driven gear 3312, while the other one is fixedly connected to the first transmission gear 3321 and rotates with the rotation of the first transmission gear 3321.

The bracket 341 is fixedly connected to the first main body 10 or the second main body 20 and movably connected to the torsion component 342. The bracket 341 rotates with the rotation of the torsion component 342, and drives the connected first main body 10 or the second main body 20 to rotate. In the example shown in FIG. 10, the bracket 341 is fitted around the torsion component 342. Specifically, the bracket 341 is provided with at least one guide slot 3411 engaged with the torsion component 342. The torsion component 342 abuts against the at least one guide slot 3411 and is slidable along the guide slot 3411.

The bracket 341 may be fixedly connected to the first main body 10 or the second main body 20 in various ways. In the example shown in FIG. 10, the bracket 341 is provided with at least one positioning component 3412, which cooperates with at least one adapter on the first main body 10 or the second main body 20 to position the bracket 341. The positioning component 3412 and the adapter may be implemented as screw holes and screws, positioning holes and positioning pins, etc., which is not limited in the embodiments of the present disclosure.

In addition, in some embodiments, the bracket 341 is movably connected to at least one connecting rod 343. One end of the connecting rod 343 is connected to the securing portion 38, and the other end is connected to the bracket 341. The connecting rod 343 limits the bracket 341 during the movement of the bracket 341.

In some embodiments, the motorized rotating-shaft assembly 31 further includes a support component 36. The supporting component 36 is located between the first connection portion 35 and the second connection portion 34. The supporting component 36 fills the gap between the first connection portion 35 and the second connection portion 34, to improve the stability and reliability of the connection mechanism 30.

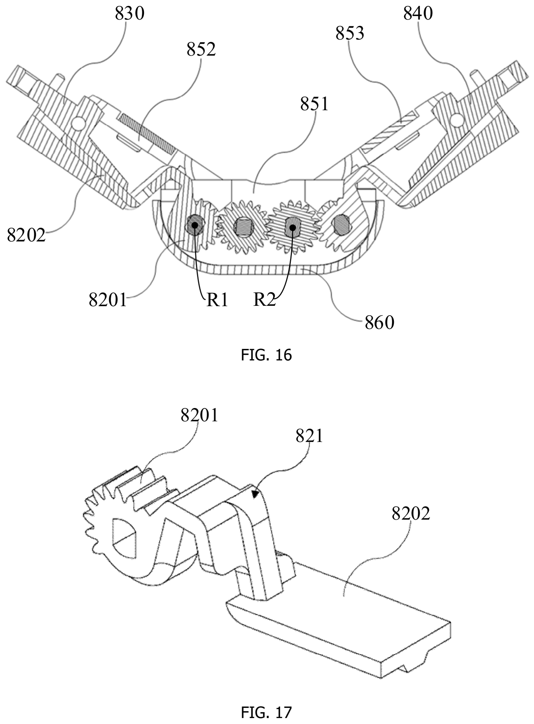

In some embodiments, the first main body is rotatable relative to the connection mechanism about a first axis of rotation (e.g., R1 defined by a drive shaft in FIG. 16), and the second main body is rotatable relative to the connection mechanism about a second axis of rotation (e.g., R2 defined by a drive shaft in FIG. 16) different from the first axis. In some examples, the first axis of rotation and the second axis of rotation are spaced apart from each other and substantially parallel to the folding axis.

In some embodiments, the angle detection module 301 is disposed at the connection mechanism 30 and configured to detect the angle of the second main body 20 and/or the first main body 10 relative to the connection mechanism 30. In some examples, the angle detection module 301 is a Hall sensor, and at least one of the first main body 10 or the second main body 20 further includes a magnetic component. The angle detection module 301 identifies the rotation angle and position of at least one of the first main body 10 or the second main body 20 by detecting changes in magnetic field intensity.

In some other embodiments, the angle detection module 301 may be disposed at the first main body 10 and configured to detect the angle of the second main body 20 relative to the first main body 10.

In the optional embodiments described above, the first connection portion 35 and the second connection portion 34 are symmetrically disposed on both sides of the transmission component 33. The power drive component 32 in the connection mechanism 30 drives the first main body 10 and the second main body 20 to rotate synchronously in opposite directions through the first connection portion 35 and the second connection portion 34. Specifically, the power drive component 32 drives the first gear set 331 to rotate, and the rotation of the first gear set 331 drives the torsion components 342 in the first connection portion 35 and the second connection portion 34 to rotate synchronously, which in turn drives the brackets 341 connected to the torsion components 342 to rotate synchronously, thereby realizing the synchronous rotation of the second main body 20 and the first main body 10 relative to each other. Those of ordinary skill in the art can understand that, the motorized rotating-shaft assembly 31 may be implemented through other structures, which is not limited in the embodiments of the present disclosure.

In the embodiments of the present disclosure, by arranging the power drive component 32, the connection mechanism 30 of the electronic device drives the rotation of the second connection portion 34 and the first connection portion 35 in opposite directions. The overall structure of the connection mechanism 30 is compact and efficient, which saves internal space and improves transmission efficiency, thereby increasing the speed of the electronic device in switching between different modes.

In some embodiments, the electronic device further includes at least one of one or more processors, a memory, an accelerometer, or a gyroscope. The memory may be configured to store various types of data to support the operation of the electronic device, such as caching the image data captured by the camera 22. The processor may be configured to execute various operations of the electronic device, such as recognition of user input instructions, identification of rotation angles, etc. The gyroscope is configured to provide excellent anti-shake functionality to ensure that the video images captured by the electronic device in various usage scenarios are stable and clear.

In some embodiments, the accelerometer and/or gyroscope may be disposed on the mainboard within the second main body 20. In a motion scenario or when the second main body 20 rotates relative to the first main body 10, the gyroscope helps the camera 22 to realize the anti-shake functionality.

In some embodiments, the electronic device provides a plurality of anti-shake options for the user to choose from. The user may manually switch the anti-shake option during shooting according to different usage scenarios and needs. In some examples, information associated with the plurality of anti-shake options is output to the user through the display 23, the speaker module 13, or other output components for the user to select and switch. The electronic device may output information associated with the plurality of anti-shake options if it is determined that the quality of the currently captured image does not meet expectations, or that the shooting environment or scene changes. Alternatively, the information associated with the plurality of anti-shake options is output in response to receiving a user instruction for viewing, etc., which is not limited in the embodiments of the present disclosure.

In some embodiments, the electronic device may determine at least one of the movement configuration of the user or usage scenario, and automatically adjust one or more anti-shake parameters based on at least one of the movement configuration or the usage scenario to achieve the best shooting effect. For example, the anti-shake level is automatically increased in a scenario where the movement of the user is intense, and the anti-shake level is automatically decreased in a scenario where the user is still or moves gently, which is not limited in the embodiments of the present disclosure.

In some embodiments, the electronic device by default embeds the motion data obtained by the accelerometer and/or gyroscope into the captured video data, or converts the motion data into a file in a format like csv or json, so as to support offline anti-shake processing of the video after recording.

In some embodiments, the electronic device further includes at least one sensor, such as one or more of a physiological sensor, an environmental sensor, and a motion sensor.

In some other embodiments, in order to reduce the hardware cost of the electronic device and realize a compact design of the electronic device, the electronic device may not include any internal sensor, but acquire sensor data by connecting to an external sensor device. Accordingly, the present disclosure provides a separate sensor device including at least one sensor. The electronic device may be connected to the sensor device and collect sensor data through the sensor device. The at least one sensor included in the sensor device may include at least one of a physiological sensor, a motion sensor, or an environmental sensor.

In some embodiments, the sensor device may include a plurality of environmental sensors, such as a gas sensor (e.g., a carbon dioxide sensor, a carbon monoxide sensor, a harmful gas sensor, etc.), an ultraviolet (ultraviolet) sensor, a PM2.5 sensor, an infrared sensor, an ambient temperature sensor, an ambient humidity sensor, an ambient brightness sensor, a positioning sensor, an air pressure sensor, and/or the like.

In some embodiments, the sensor device may include a housing and a circuit board within the housing. The plurality of environmental sensors are disposed on the circuit board. In some embodiments, the housing of the sensor device may include at least one vent groove to facilitate the collection of sensor data by the environmental sensors.

In some embodiments, the sensor device may include a battery unit and a charging unit, or include a micro-control unit and a memory. In some embodiments, the sensor device may include as few electronic components as possible to facilitate its miniaturization design. For example, the sensor device may not include any user interactive components such as a display or a speaker, but this is not limited in the embodiments of the present disclosure.

In some embodiments, the plurality of environmental sensors may be disposed on the same circuit board, either on the same side or different sides of a single circuit board. The plurality of environmental sensors and other electronic components, such as the battery unit, may be disposed on the same circuit board or different circuit boards. In some examples, the plurality of environmental sensors and at least one other electronic component may be disposed on the same circuit board, where the plurality of environmental sensors are disposed on the first side of the circuit board, while the at least one other electronic component is disposed on the second side of the circuit board opposite to the first side, so as to minimize the device space and realize the miniaturization design of the sensor device.

In some embodiments, the sensor device may include a sensor connection component that allows the sensor device to be detachably connected to the first main body 10. In some examples, the sensor connection component may include a first magnetic component and/or a positioning component. Correspondingly, a second magnetic component and/or a positioning adapter is provided at the bottom of the first main body 10. In this way, the sensor device may be connected to the first main body 10 by adsorption through the first magnetic component and the second magnetic component. Alternatively, the sensor device is detachably connected to the first main body 10 through a positioning component and a positioning adapter. The positioning component may be implemented as a buckle, and the positioning adapter may be implemented as a slot, etc., which is not limited in the embodiments of the present disclosure.

In some embodiments, the sensor device may include a charging port for connecting to an external power source.

In some embodiments, the sensor connection component may include at least one first charging port configured to connect to at least one second charging port at the bottom of the first main body 10, and provide power to the first main body 10 or receive power provided by the first main body 10.

In some embodiments, if the sensor device is connected to both the first main body 10 and the external power source, the sensor device may be configured to transmit power provided by the external power source to the first main body 10.

In some embodiments, if the sensor device is not connected to the external power source, the battery unit of the sensor device may be configured to provide power to the first main body 10, or receive power transmitted from the first main body 10.

In some embodiments, the sensor connection component may include at least one first data transmission port, such as a serial port, configured to interact with the electronic device for command exchange and/or data transmission when connected to a second data transmission port provided at the bottom of the first main body 10.

In some embodiments, the sensor device further includes at least one first USB port configured to transmit data with the electronic device when connected to a second USB port provided at the bottom of the first main body. In some embodiments, the sensor device may be connected to other electronic devices (such as a computer) via the first USB port to perform data transmission. The first USB port and the charging port may be disposed on a same side or different sides of the sensor device, or may share a same physical port.

In some embodiments, the sensor device does not include the wireless communication module. In such a case, when the sensor device is physically connected to the first main body 10, the sensor device may transmit the sensor data detected by at least one sensor mounted therein to the electronic device, and the processor or other processing means of the electronic device may process the received sensor data to obtain a detection result. Alternatively, the electronic device may transmit the received sensor data, either directly or after processing, to another electronic device, where the sensor data may be processed to obtain a detection result, or where the detection result is presented to the user. In some other embodiments, the sensor device may process the sensor data to obtain a detection result, and then transmit the detection result to the electronic device, which provides the detection result to the user, or provides an alarm or a reminder. Alternatively, the detection result may be transmitted to another electronic device by the electronic device, and the another electronic device may provide an alarm or a reminder.

In some embodiments, one or more shooting parameters of the camera 22 and/or the angle of the second main body 20 may be adjusted based on the environmental data collected by the environmental sensor. For example, in a case that the ultraviolet sensor detects that strong UB radiation, the control module may control the camera 22 to activate an anti-ultraviolet filter or adjust the image color setting to avoid overexposure of the image or equipment damage, etc.

In some embodiments, the current scenario may be determined based on the environmental data collected by the environmental sensor, and the target object or object of interest for camera shooting may be determined based on the current scenario. For example, based on the environmental data collected by the environmental sensor, it is determined that the user is currently dining in a restaurant, then the target object or object of interest for the camera is determined to be food, and the angles of the second main body 20 and/or the camera 22 are controlled so that the image captured by the camera 22 contains food.

In some embodiments, one or more other electronic components of the electronic device and/or the configuration of the electronic device may be controlled based on the environmental data collected by the environmental sensor. For example, if it is determined based on the ambient brightness data collected by the ambient brightness sensor that, the current ambient brightness is low, such as, for example, lower than a certain threshold, at least a part of the at least one light strip module 24 can be activated and the brightness of the activated light strip module 24 may be controlled, or alternatively, the flash of the camera 22 may be turned on. For another example, if the ambient brightness data collected by the ambient brightness sensor indicates that the current ambient brightness does not meet the preset or current shooting condition, and/or the PM2.5 data collected by the PM2.5 sensor indicates that the current PM2.5 concentration in the air does not meet the preset or current shooting condition, the electronic device is controlled to switch from the unfolded configuration to the folded configuration.

In some other embodiments, the environmental data collected by the environmental sensor may be used as annotation data associated with the image data synchronously collected by the camera 22, forming a video log. The user may review the video log to understand the environmental information at the time of shooting. In some other embodiments, the environmental data collected by the environmental sensor and the image data synchronously collected by the camera 22 may be sent to a terminal device or a server, so that the terminal device or the server may process the image data based on the environmental data.

In some embodiments, user health monitoring may be conducted based at least in part on the environmental data collected by the environmental sensor, and/or reminders may be provided to the user when it is determined that the current environment is abnormal or that a certain reminder condition is met. For example, when it is detected that the ambient temperature is too high or too low, the user may be reminded. For another example, when it is detected that the ambient humidity is too high or too low, the user is reminded to turn on a humidity adjustment device, such as a humidifier or dehumidifier. For another example, when it is detected that the concentration of harmful gases is high, such as, for example, exceeding a certain threshold, the user is reminded to escape, turn on an air purifier, or close windows, which is beneficial to the user's health. For another example, when it is detected that the PM2.5 concentration is high or reaches a certain air pollution standard, the user is reminded to wear a mask. For another example, when it is detected based on the infrared sensor that the local ambient temperature is too high or that a high-temperature object is rapidly approaching the user (e.g., the temperature of the object exceeds a certain threshold and/or an approaching speed of the object exceeds a certain threshold), the user is reminded to evade immediately to avoid burn.

In some embodiments, the manner of reminding the user may be determined based at least in part on the environmental data collected by the environmental sensor. For example, if it is determined based on the environmental data collected by the environmental sensor that the user is currently in a noisy environment, prompt information may be output through the display. For another example, if it is determined based on the environmental data collected by the environmental sensor that the user is currently in an environment with high ultraviolet intensity, audio prompt information may be output. For another example, if it is determined based on the environmental data collected by the environmental sensor and the image data captured by the camera that the user may be in danger, a warning message may be sent to a preset device or a preset contact number, etc.

In some embodiments, based at least in part on the environmental data collected by the environmental sensor, sleep quality analysis may be performed and/or sleep recommendations may be provided. For example, one or more sleep environment parameters, such as one or more of light condition, carbon dioxide concentration, temperature, humidity, noise and the like, may be detected by the environmental sensor, and combined with sleep monitoring data obtained by the motion sensor and/or physiological sensor to conduct sleep quality analysis, and obtain a sleep quality metric of the user, or alternatively, one or more environmental parameters affecting the sleep quality of the user may be identified, and targeted sleep recommendations may be provided to the user.

In some other embodiments, the sensor device or the electronic device may include a motion sensor, such as one or more of an accelerometer, a gyroscope, and a geomagnetic sensor, configured to collect motion data of the sensor device or the electronic device.

In some embodiments, the electronic device may interact with other electronic devices, such as wrist-worn devices, ring devices, earphone devices, head-mounted device or the like. For example, the electronic device may obtain one or more types of health data, such as motion data, sleep data, and/or physiological measurement data, from another electronic device through the wireless communication module, or obtain environmental data from the sensor device with which a physical connection is established. The electronic device may obtain the personal health data of the user by combining at least one of the health data, the environmental data, or the image data. In this case, optionally, the electronic device may present the obtained personal health data to the user, such as, for example, via the display 23, or provide health advice or health reminders to the user. In some other embodiments, the electronic device may send the image data collected by the camera 22 and/or the environmental data collected by the environmental sensor to another electronic device for analysis and processing.

Referring to FIG. 2, FIG. 3, and FIG. 7, in some embodiments, the electronic device further includes a charging base 40 configured to charge at least one of the first main body 10 or the second main body 20. The charging base 40 and the second main body 20 are respectively located on opposite sides of the first main body 10, and may be detachably connected to the first main body 10. In some examples, the charging base 40 may be magnetically connected to the first main body 10 via a magnetic component, but this is not limited in the embodiments of the present disclosure.

The charging base 40 may provide charging via either wired or wireless means. In some embodiments, at least two charging ports 16 are disposed at the bottom of the first main body 10, and at least two charging pins 41 are disposed at one end of the charging base 40 correspondingly. The charging ports 16 and the charging pins 41 cooperate to realize power transmission.

In some embodiments, a charging interface 42 for connecting to an external power source may be provided on the side of the charging base 40. In this way, when the charging base 40 is connected to both the first main body 10 and an external power source, the power supplied by the external power source may be transmitted to the first main body 10. In some embodiments, the charging base 40 may include a power module or a power storage module. When the charging base 40 is not connected to an external power source, the power from the power module or the power storage module may be transmitted to the first main body 10, which is not limited in the embodiments of the present disclosure.

In this way, by arranging the charging circuit in the charging base 40 and configuring the charging base 40 to be detachably connected to the first main body, convenient charging may be achieved while reducing the weight and size of the first main body 10 and the second main body 20.

Referring to FIG. 2, in some embodiments, the electronic device may include a securing mechanism 50 detachably connected to the first main body 10. The securing mechanism 50 may be detachably connected to the first main body 10 by means of magnetic adsorption, clamping, buckling, etc., which is not limited in the embodiments of the present disclosure. In some examples, the securing mechanism 50 may be detachably mounted on the back of the first main body 10, allowing the user to mount the electronic device on the chest, on a mobile phone, on a helmet, on a bicycle, on a hand-held rod, etc., so as to better adapt to different application scenarios. In some embodiments, the securing mechanism 50 includes a clamping plate with at least one through hole 51 for engaging with a strap, enabling the electronic device to be fixed on the human body via the strap.

In some embodiments, in the unfolded configuration, the electronic device may have a length of 80mm-120mm along the vertical direction shown in FIG. 1, and a width of 30mm-60mm along the horizontal direction shown in FIG. 1. The second main body 20 may have a thickness of 8mm-12mm along the front-back direction shown in FIG. 1. The upper part of the first main body 10 may have a thickness of 8mm-12mm. The lower part of the first main body 10 may have a thickness of 16mm-24mm, making the device compact, lightweight, and easy to carry.

The thickness of the connection mechanism 30 may be less than that of the second main body 20. In some embodiments, the thickness of the second main body 20 is approximately 10mm, while the thickness of the connection mechanism 30 is less than 8mm, but this is not limited in the embodiments of the present disclosure.

In the embodiments of the present disclosure, the first main body 10 and the second main body 20 of the electronic device are connected to each other via the connection mechanism 30, and coordinated rotation of the second main body 20 and the first main body 10 about the folding axis is enabled under the drive of the motorized rotating-shaft assembly 31, so that the camera 22 is physically exposed or concealed. Optionally, the shooting angle may be adjusted during use, which not only avoids frequent manual adjustment by the user and improves usability, but also makes the shooting content more flexible and comprehensive.

Meanwhile, the connection mechanism 30 may be configured to simultaneously drive the second main body 20 and the first main body 10 to rotate relative to each other, realizing bidirectional rotation and improving rotation efficiency.

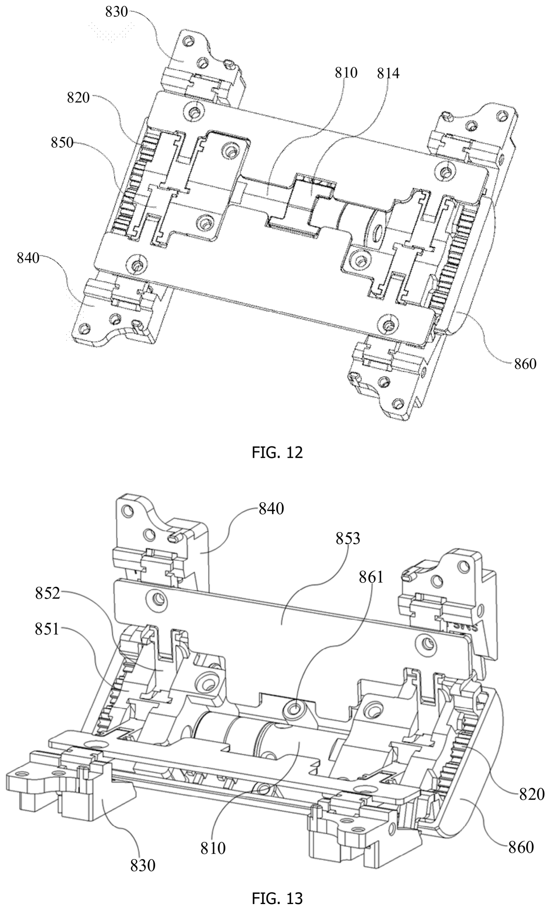

The possible implementations of the connection mechanism is described hereafter. Referring to FIG. 12, FIG. 13, and FIG. 1, the connection mechanism includes a power drive component 810 (which may be or correspond to the power drive component 32 as described above), a transmission component 820 (which may be or correspond to the transmission component 33 as described above), a first connection component 830 (which may be or correspond to the first connection portion 35 as described above), and a second connection component 840 (which may be or correspond to the second connection portion 34 as described above). The transmission component 820 is connected to the power drive component 810, and the power drive component 810 is configured to provide power for the transmission component 820. The first connection component 830 and the second connection component 840 are both connected to the transmission component 820. The first connection component 830 extends toward a first side of the transmission component 820, and the second connection component 840 extends toward a second side of the transmission component 820 opposite to the first side. The transmission component 820 is configured to transmit power to at least one of the first connection component 830 or the second connection component 840. The first connection component 830 is connected to the first main body 10, and in the cases that the first connection component 830 is connected to the transmission component 820, the first connection component 830 is configured to transmit power to the first main body 10 to drive the first main body 10 to rotate. The second connection component 840 is connected to a second main body 20, and in the cases that the second connection component 840 is connected to the transmission component 820, the second connection component 840 is configured to transmit power to the second main body 20 to drive the second main body 20 to rotate.

In some implementations, the connection mechanism further includes a housing 860 (which may be or correspond to the housing 39 as described above) for supporting and securing the connection mechanism. Both the power drive component 810 and the transmission component 820 are fixedly connected to the housing 860.

In some implementations, the housing 860 has a curved surface, which can shield and protect the internal components of the connection mechanism, improving the aesthetics and reliability of the connection mechanism.

The power drive component 810 is configured to drive, via the transmission component 820, at least one of the first connection component 830 or the second connection component 840 to rotate, i.e., actuate a coordinated rotation of the first connection component 830 and the second connection component 840, thereby realizing the unfolding or folding of the connection mechanism about the folding axis. In some implementations, the power drive component 810 is configured to drive, via the transmission component 820, the first connection component 830 to rotate while the second connection component 840 remains stationary. In some other implementations, the power drive component 810 is configured to drive, via the transmission component 820, the second connection component 840 to rotate, while the first connection component 830 remains stationary. In some other implementations, the power drive component 810 may be configured to drive, via the transmission component 820, the first connection component 830 and the second connection component 840 to rotate synchronously. For example, the first connection component 830 and the second connection component 840 rotate synchronously in opposite directions. The rotation angles of the first connection component 830 and the second connection component 840 during the synchronous rotation may be the same or different, thereby improving transmission efficiency and making the folding manner of the connection mechanism more flexible.

A range of the angle between the first main body and the second main body may be from 0° to 90°, or from 0° to 180°, and so on. In some implementations, the rotation angle range of the first connection component 830 and/or the second connection component 840 is from 0° to 90°. In some other implementations, the rotation angle range of the first connection component 830 and/or the second connection component 840 may be from 0° to 180°. In some other implementations, the rotation angle range of the first connection component 830 and/or the second connection component 840 may be from 0° to 45°. The rotation ranges of the first connection component 830 and the second connection component 840 are not limited herein.

In some implementations, the connection mechanism may have an unfolded state and a folded state. In the unfolded state, the extending directions of the first connection component 830 and the second connection component 840 are opposite and parallel or approximately parallel to each other, and correspondingly, the angle between the first connection component 830 and the second connection component 840 may be substantially 180°. In the folded state, the extending direction of the first connection component 830 is perpendicular or approximately perpendicular to the extending direction of the second connection component 840, and correspondingly, the angle between the first connection component 830 and the second connection component 840 is substantially 90°. Alternatively, in the folded state, the extending directions of the first connection component 830 and the second connection component 840 are generally the same and parallel or approximately parallel to each other, and correspondingly, the angle between the first connection component 830 and the second connection component 840 may be 0° or approximately 0°. For example, the first connection component 830 and the second connection component 840 are overlapped or overlied to each other, and so on. The specific implementations of the unfolded state and folded state of the connection mechanism may correspond to the unfolded configuration and the folded configuration of the electronic device, which are not limited herein.

In some implementations, the power drive component 810 includes a motor 811 (which may be or correspond to the motor 321 as described above) and a gearbox 812 disposed on at least one side of the motor 811, and the gearbox 812 is connected to the transmission component 820 through an output shaft 813. Optionally, the gearbox 812 includes a plurality of planetary gear sets for increasing torque. One end of the output shaft 813 is connected to the gearbox 812, and the other end is connected to the transmission component 820. In some examples, the transmission component 820 includes at least one gear 823, and the output shaft 813 may be connected to the at least one gear 823 to output power to the at least one gear 823. For example, the gear may include a body with a hole or groove in the central region and sawteeth provided on the periphery of the body, and the output shaft 813 may be inserted into the hole or groove of the gear to output power to the gear, but the implementations of the present application are not limited thereto.

In some implementations, the power drive component 810 further includes a power drive fixing component 814 configured for securing the power drive component 810 to the housing 860. For example, the housing 860 includes a securing portion 861 (which may be or correspond to the securing portion 38 as described above), and the power drive fixing component 814 is connected to the securing portion 861 by bolts, but the present application does not limit the implementations of the fixing manner of the power drive fixing component 814.

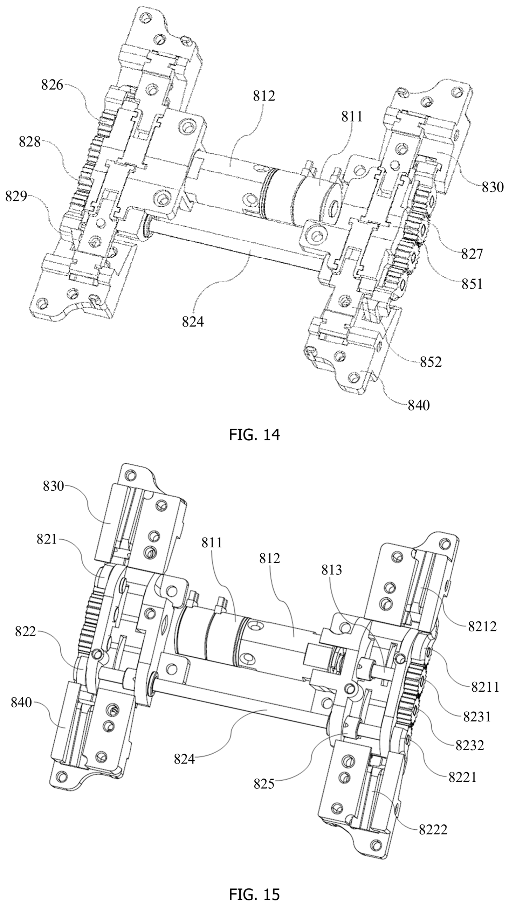

Referring to FIG. 14 to FIG. 16, in some implementations, the transmission component 820 includes at least one of a first transmission component 821 or a second transmission component 822. The first transmission component 821 is connected, for example, fixedly or movably connected, to the first connection component 830, and the second transmission component 822 is connected, for example, fixedly or movably connected, to the second connection component 840. The power drive component 810 is configured to drive at least one of the first transmission component 821 or the second transmission component 822 to rotate, thereby driving the first connection component 830 connected to the first transmission component 821 and/or the second connection component 840 connected to the second transmission component 822 to rotate.

In some implementations, the first transmission component 821 and the second transmission component 822 may be symmetrically arranged, and/or the first connection component 830 and the second connection component 840 may be symmetrically arranged on opposite sides of the transmission component 820, but the implementations of the present application are not limited thereto.

In the example shown in FIG. 17, at least one of the first transmission component 821 or the second transmission component 822 includes a gear portion 8201 and a torsion rod portion 8202. The gear portion 8201 may include one or more gears configured to rotate under the drive of the power drive component 810. One end of the torsion rod portion 8202 is connected to the gear portion 8201 and may move with the rotation of the gear portion 8201. The other end of the torsion rod portion 8202 is connected to the first connection component 830 or the second connection component 840, and is configured to drive the first connection component 830 or the second connection component 840 to rotate.

In some implementations, the gear portion 8201 and the torsion rod portion 8202 are fixedly connected to each other. For example, the torsion rod portion 8202 includes a connection component configured to fix the torsion rod portion 8202 to the gear portion 8201. For another example, the gear portion 8201 and the torsion rod portion 8202 are integrally formed, but the implementations of the present application are not limited thereto.

In the example shown in FIG. 15, the first transmission component 821 includes a first torsion rod 8212, and a first gear 8211 fixedly connected to the first torsion rod 8212. The first torsion rod 8212 is movably connected to the first connection component 830. The second transmission component 822 includes a second torsion rod 8222 movably connected to the second connection component 840 and a second gear 8221 fixedly connected to the second torsion rod 8222. In some other examples, at least one of the first transmission component 821 or the second transmission component 822 may also include other gears, which is not limited in the implementations of the present application.

In some implementations, the first transmission component 821 is connected to the second transmission component 822, and the power drive component 810 is connected to one of the first transmission component 821 and the second transmission component 822. The one of the first transmission component 821 and the second transmission component 822 connected to the power drive component 810 is configured to transmit power to the other. In an example, the power drive component 810 is connected to the first transmission component 821 and may be configured to output power to the first transmission component 821. While driving the first connection component 830 to move, the first transmission component 821 may be configured to transmit power to the second transmission component 822, so that the second transmission component 822 drives the second connection component 840 to move.

In the example shown in FIG. 15, the first transmission component 821 and the second transmission component 822 respectively include a first gear 8211 and a second gear 8221, and the first gear 8211 may mesh with the second gear 8221 to realize power transmission. In an example, the output shaft 813 of the power drive component 810 is connected to the first gear 8211. In this way, the power drive component 810 drives the first gear 8211 to rotate, the rotation of the first gear 8211 drives the first torsion rod 8212 connected to the first gear 8211 to rotate, thereby driving the first connection component 830 to rotate. At the same time, the rotation of the first gear 8211 drives the connected second gear 8221 to rotate, and the rotation of the second gear 8221 drives the second torsion rod 8222 connected thereto to rotate, thereby driving the second connection component 840 to rotate.

In some implementations, the transmission component further includes at least one gear 823, and the at least one gear 823 includes one gear or multiple meshed gears. The at least one gear 823 is located between the first transmission component 821 and the second transmission component 822. The at least one gear 823 is connected to both the first transmission component 821 and the second transmission component 822. The power drive component 810 is connected to the at least one gear 823, so that the at least one gear 823 can transmit the power output by the power drive component 810 to the first transmission component 821 and the second transmission component 822. For example, the at least one gear 823 may include a gear meshed with the gear of the first transmission component 821, a gear meshed with the gear of the second transmission component 822, and a gear connected to the power drive component 810 to realize power transmission. Any two of the gear meshed with the gear of the first transmission component 821, the gear meshed with the gear of the second transmission component 822, and the gear connected to the power drive component 810 may be the same or different. In the example shown in FIG. 15, the at least one gear 823 includes two meshed gears, namely a third gear 8231 and a fourth gear 8232. The power drive component 810 is connected to the third gear 8231. For example, the output shaft 813 of the power drive component 810 is connected to the third gear 8231. The third gear 8231 meshes with the first gear 8211, and the fourth gear 8232 meshes with the second gear 8221. In this way, the third gear 8231 may transmit the power output by the power drive component 810 to the first gear 8211, and the rotation of the first gear 8211 drives the first torsion rod 8212 connected thereto to move, thereby driving the first connection component 830 to move. Moreover, the third gear 8231 may transmit the power output by the power drive component 810 to the fourth gear 8232, and then to the second gear 8221 meshed with the fourth gear 8232. The rotation of the second gear 8221 drives the second torsion rod 8222 connected thereto to move, thereby driving the second connection component 840 to move. The above examples are described by taking the transmission component including at least one gear 823 as an example. In some implementations, at least one of the first transmission component 821 or the second transmission component 822 includes more than two meshed gears. For example, the gear portion 8201 includes more than two meshed gears, and a transmission manner thereof is similar to the examples described above, which will not be repeated here.

As shown in FIG. 14, in some implementations, the transmission component 820 includes a first transmission portion 826, a second transmission portion 827, and a synchronous rod 824 located between the first transmission portion 826 and the second transmission portion 827. Two ends of the synchronous rod 824 are respectively connected to the first transmission portion 826 and the second transmission portion 827. In some implementations, the power drive component 810 has only one output end. In this case, one of the first transmission portion 826 and the second transmission portion 827 is connected to the power drive component 810, and is configured to drive the synchronous rod 824 to rotate under the drive of the power drive component 810. The rotation of the synchronous rod 824 drives the other of the first transmission portion 826 and the second transmission portion 827 to move, so as to realize the synchronous rotation of both sides of the connection mechanism, make the movement of the connection mechanism more stable, and improve transmission efficiency.

In the example shown in the drawings, the synchronous rod 824 is arranged parallel or approximately parallel to the output shaft 813 of the power drive component 810, the first transmission portion 826 and the second transmission portion 827 are respectively located at the left end and right end of the synchronous rod 824. The first connection component 830 and the second connection component 840 are respectively located at the upper and lower sides of the first transmission portion 826 and/or the second transmission portion 827, but the present disclosure is not limited thereto.

The first transmission portion 826 and the second transmission portion 827 may be implemented in various ways. In some implementations, at least one of the first transmission portion 826 or the second transmission portion 827 may include a gear transmission mechanism 828 and at least one torsion rod transmission mechanism 829. The gear transmission mechanism may be connected to the power drive component 810 or the synchronous rod 824. One end of the torsion rod transmission mechanism 829 is connected to the gear transmission mechanism 828, and the other end is connected to the first connection component 830 or the second connection component 840. The gear transmission mechanism 828 may rotate under the drive of the power drive component 810 or the drive of the synchronous rod 824. The torsion rod transmission mechanism is connected to the gear transmission mechanism 828 and may move with the rotation of the gear transmission mechanism. The torsion rod transmission mechanism 829 is movably connected to the first connection component 830 or the second connection component 840, thereby driving the first connection component 830 or the second connection component 840 to move. For example, the torsion rod transmission mechanism 829 may utilize the torque between the torsion rod transmission mechanism 829 and the first connection component 830 or the second connection component 840 to drive the first connection component 830 or the second connection component 840 to rotate.

The gear transmission mechanism 828 may include one or more gears, such as the at least one gear 823 in the above-mentioned examples, or the gear portion 8201 in the above examples. The torsion rod transmission mechanism 829 may include at least one torsion rod, such as the torsion rod portion 8202 in the above examples, or include a fixedly connected torsion rod and gear. For example, the torsion rod transmission mechanism 829 includes the first transmission component 821 and/or the second transmission component 822 in the above examples. In this case, at least one of the first transmission portion 826 and the second transmission portion 827 may further include or omit the gear transmission mechanism 828, which is not limited herein.

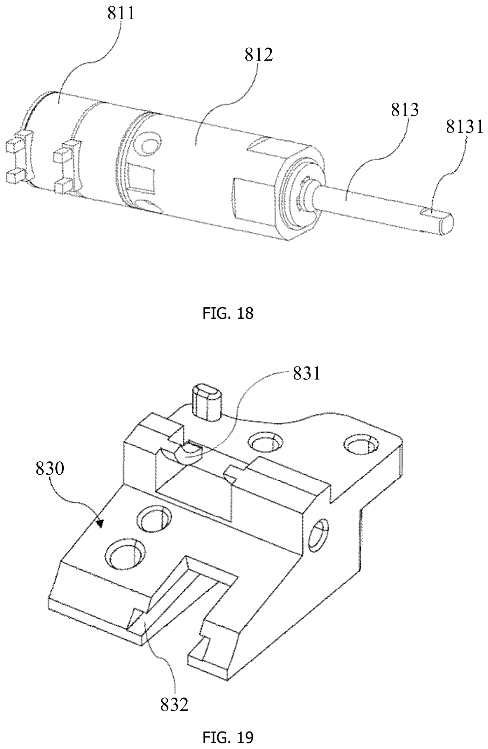

There are various ways to connect the synchronous rod 824 and/or the power drive component 810 to the gear transmission mechanism 828. In some implementations, the central region of one or more gears included in the gear transmission mechanism 828 may have a hole or a groove, and the synchronous rod 824 and/or the output shaft 813 of the power drive component 810 is inserted into the hole or the groove. In some implementations, Referring to the example shown in FIG. 18, the end of the output shaft 813 of the power drive component 810 includes a flat position structure 8131. The shape of the hole or groove of the gear portion is adapted to the flat position structure 8131. The flat position structure 8131 is inserted into the hole or groove of the gear portion, so that the output shaft 813 is precisely matched with the gear portion, enhancing the stability of the connection and torque transmission capacity, and avoiding the slip problem that may occur in traditional matching methods, thereby improving the working efficiency, durability, and reliability of the overall system.

In some implementations, an end of the synchronous rod 824 may also include the above-mentioned flat position structure 8131, but the implementations of the present application are not limited thereto.

In some implementations, at least one of the first transmission portion 826 or the second transmission portion 827 may include one or more torsion rod transmission mechanisms 829, such as, for example, two torsion rod transmission mechanisms 829, which are respectively movably connected to the first connection component 830 and the second connection component 840. In some implementations, at least one of the first connection component 830 or the second connection component 840 may be sleeved on the torsion rod of the torsion rod transmission mechanism 829, but the implementations of the present application are not limited thereto.

In the implementations of the present application, a rotation axis of the torsion rod, torsion rod component, or torsion rod portion connected to the first connection component 830 and/or the second connection component 840 may be different from that of the first connection component 830 and/or the second connection component 840, resulting in relative movement therebetween during rotation. Therefore, the transmission component 820 may be movably connected to the first connection component 830 and/or the second connection component 840. Referring to the example shown in FIG. 19, at least one of the first connection component 830 or the second connection component 840 includes a guide groove 832 configured to accommodate the torsion rod. The torsion rod may extend into the guide groove 832 and be movable along the guide groove 832. In this way, when the torsion rod moves with the rotation of the gear, the torsion rod is enabled to drive the first connection component 830 or the second connection component 840 to rotate, and the torsion rod is enabled to slide in the guide groove 832. The torsion rod serves as a torque arm to realize the automatic folding or unfolding of the connection mechanism.

In some implementations, the connection mechanism includes a plurality of first connection components 830 and a plurality of second connection components 840. For example, the connection mechanism includes a first connection component 830 and a second connection component 840 connected to the first transmission portion 826, as well as a first connection component 830 and a second connection component 840 connected to the second transmission portion 827, but the present disclosure is not limited thereto.

The first transmission portion 826 and the second transmission portion 827 may be symmetrically arranged relative to the synchronous rod 824. In some implementations, the structures of the first transmission portion 826 and the second transmission portion 827 are similar or identical, which is not limited herein.

In some examples, the first transmission portion 826 includes a first torsion rod transmission mechanism movably connected to the first connection component 830, a second torsion rod transmission mechanism movably connected to the second connection component 840, and a first gear transmission mechanism disposed between the first torsion rod transmission mechanism and the second torsion rod transmission mechanism. The second transmission portion 827 may include a third torsion rod transmission mechanism movably connected to the first connection component 830, a fourth torsion rod transmission mechanism movably connected to the second connection component 840, and a second gear transmission mechanism disposed between the third torsion rod transmission mechanism and the fourth torsion rod transmission mechanism. Two ends of the synchronous rod 824 are connected to the first gear transmission mechanism and the second gear transmission mechanism, respectively.

In this case, assuming that the first transmission portion 826 is connected to the power drive component 810, optionally, the first gear transmission mechanism may be connected to the power drive component 810 and rotate under the drive of the power drive component 810. The first gear transmission mechanism may drive at least one of the first torsion rod transmission mechanism or the second torsion rod transmission mechanism connected thereto to move, thereby driving the first connection component 830 connected to the first torsion rod transmission mechanism and/or the second connection component 840 connected to the second torsion rod transmission mechanism to move. Moreover, the rotation of the first gear transmission mechanism drives the synchronous rod 824 connected to thereto to rotate, thereby driving the second gear transmission mechanism connected to the other end of the synchronous rod 824 to rotate. The rotation of the second gear transmission mechanism is enabled to drive the third torsion rod transmission mechanism and the fourth torsion rod transmission mechanism connected thereto to move, thereby driving the first connection component 830 connected to the third torsion rod transmission mechanism and the second connection component 840 connected to the fourth torsion rod transmission mechanism to move.

In an example, at least one of the first gear transmission mechanism or the second gear transmission mechanism may include at least one gear 823. At least one of the first torsion rod transmission mechanism or the third torsion rod transmission mechanism may include the first transmission component 821 or the torsion rod portion 8202. At least one of the second torsion rod transmission mechanism or the fourth torsion rod transmission mechanism may include the second transmission component 822 or the torsion rod portion 8202, but the implementations of the present application are not limited thereto.

In some other implementations, the first transmission portion 826 includes a first torsion rod transmission mechanism connected to the first connection component 830 and a second torsion rod transmission mechanism connected to the second connection component 840. The second transmission portion 827 may include a third torsion rod transmission mechanism connected to the first connection component 830 and a fourth torsion rod transmission mechanism connected to the second connection component 840. One or more of the torsion rod transmission mechanisms herein may include at least one gear and a torsion rod, such as the gear portion 8201 and the torsion rod portion 8202 described in the above examples, and are connected to the power drive component 810 and/or the synchronous rod 824 through gears.

In some other implementations, at least one of the first transmission portion 826 or the second transmission portion 827 may include one torsion rod transmission mechanism 829, and the torsion rod transmission mechanism 829 includes at least one gear portion 8201 and two torsion rod portions 8202 disposed on two sides of the at least one gear portion 8201, or includes at least one gear and two torsion rods connected to the at least one gear, which is not limited herein.

The power drive component 810 may be implemented in various ways. For example, in the above examples, the power drive component 810 has only one output end connected to the first transmission portion 826 or the second transmission portion 827, and the power drive component 810 is configured to output power to the first transmission portion 826 or the second transmission portion 827 connected thereto. In some other implementations, the power drive component 810 may have two output ends, which respectively connected to the first transmission portion 826 and the second transmission portion 827. In this case, the power drive component 810 may output power to the first transmission portion 826 and the second transmission portion 827 simultaneously, or output power selectively to the first transmission portion 826 or the second transmission portion 827. Correspondingly, the number of motors 811 and gearboxes 812 included in the power drive component 810 may be one or more, which is not limited herein. The specific arrangement and transmission manner of the transmission component 820 may also be adaptively adjusted according to different arrangements of the power drive component 810, which is not limited in the present application.

In some implementations, the connection mechanism further includes a limiting component 850. The limiting component 850 is movably connected to at least one of the first connection component 830 and the second connection component 840, and is configured to limit the rotation of the first connection component 830 and/or the second connection component 840.

In some implementations, the limiting component 850 includes a limiting bracket 851 (which may be or correspond to the bracket 341 as described above) and a sliding component 852. The limiting bracket 851 is fixedly arranged on the housing 860. The power drive component 810 and the transmission component 820 are located on opposite sides of the limiting bracket 851. The limiting bracket 851 includes an avoidance hole, the output shaft 813 of the power drive component 810 passes through the avoidance hole to connect to the first transmission component 821, and both ends of the synchronous rod 824 pass through the avoidance hole to connect to a pair of second transmission components 822. At least one end of the synchronous rod 824 includes a bushing 825, and the output shaft 813 of the power drive component 810 is sleeved with a bushing 825. The bushing 825 passes through the avoidance hole to reduce friction between the output shaft 813, the synchronous rod 824, and the limiting bracket 851, thereby improving transmission efficiency.

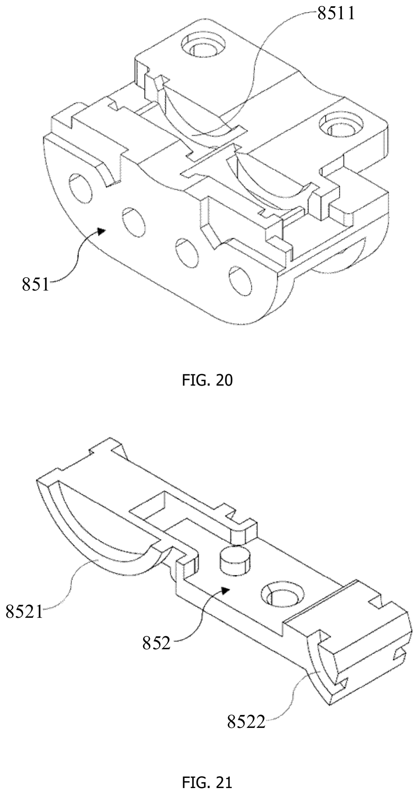

Referring to FIG. 19 to FIG. 21 simultaneously, the limiting bracket 851 includes a first limiting portion 8511, the first end of the sliding component 852 includes a second limiting portion 8521 slidably fitted with the first limiting portion 8511, and the second end of the sliding component 852 is movably connected to the first connection component 830 and/or the second connection component 840. One of the first limiting portion 8511 and the second limiting portion 8521 is a sliding wall, and the other is a sliding groove. The sliding wall is clamped in the sliding groove and is able to slide along the track of the sliding groove.

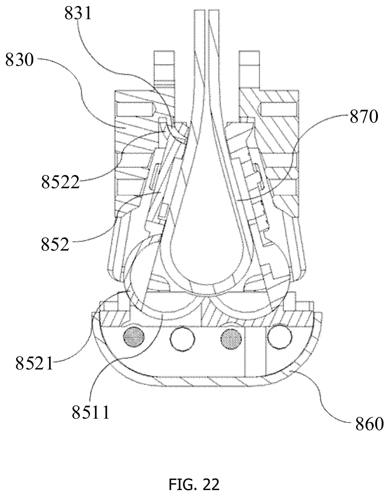

Referring to the example shown in FIG. 22. In some implementations, both the first limiting portion 8511 and the second limiting portion 8521 are in annular configurations. During the rotation of the sliding component 852, the second limiting portion 8521 is slidably fitted with the first limiting portion 8511. Under the restriction of the first limiting portion 8511, the sliding component 852 rotates around the central region of annular configuration of the first limiting portion 8511.

In some implementations, the first connection component 830 and/or the second connection component 840 includes a third limiting portion 831, and the limiting component includes a fourth limiting portion 8522 slidably fitted with the third limiting portion 831. Optionally, the limiting component 850 includes a limiting bracket 851 and a sliding component 852. The sliding component 852 includes a fourth limiting portion 8522 slidably fitted with the third limiting portion 831. The fourth limiting portion 8522 is disposed at the end of the sliding component 852 away from the second limiting portion 8521. One of the third limiting portion 831 and the fourth limiting portion 8522 is a sliding wall, and the other is a sliding groove.

Optionally, both the third limiting portion 831 and the fourth limiting portion 8522 are annular. During the movement of the connection mechanism, the rotation of the first connection component 830 and/or the second connection component 840 drives the sliding component 852 to rotate via the cooperation of the third limiting portion 831 and the fourth limiting portion 8522. During the rotation of the sliding component 852, the second limiting portion 8521 is slidably fitted with the first limiting portion 8511. Under the restriction of the first limiting portion 8511, both the sliding component 852 and the first connection component 830 and/or the second connection component 840 rotate around the center of the arc configuration of the first limiting portion 8511, thereby realizing the limiting of the first connection component 830 and/or the second connection component 840.

In some implementations, the limiting component 850 further includes a support plate 853 (which may be or correspond to the support component 36 as described above). The support plate 853 is fixedly secured to the sliding component 852 and rotates together with the first connection component 830 and/or the second connection component 840. Optionally, the support plate 853 is fixedly secured to both sliding components 852 located at two ends of the connection mechanism to ensure the synchronous rotation of the first connection component 830 and/or the second connection component 840.

When the connection mechanism is in folded configuration, the torsion rod portion 8202 or the torsion rod transmission mechanism 829 drives the first connection component 830 and the second connection component 840 movably connected thereto to move. The movement of the first connection component 830 and the second connection component 840 drives the sliding component 852 to move through the sliding fit of the third limiting portion 831 and the fourth limiting portion 8522. Through the cooperation of the annular first limiting portion 8511 and the second limiting portion 8521, it is ensured that the first connection component 830 and the second connection component 840 rotate around the central region of the annular configuration of the first limiting portion 8511. The first connection component 830 and the second connection component 840 are folded after rotating 90°, so that the side surface of a flexible display 870 (which may be or correspond to the display 23 as described above) of the electronic device is configured in an approximate water-drop shape.

Under the control of a control mechanism of the foldable electronic device, the hovering of the first connection component 830 and the second connection component 840 at any angle can be realized. The connection mechanism includes a Hall magnet component coaxial with the output shaft 813. When the Hall magnet rotates, a magnetic field change occurs, and the signal indicating the magnetic field change is transmitted to the control mechanism to accurately identify the rotation angle of the first connection component 830 or the second connection component 840.

When the control mechanism inputs a drive signal to the motor 811, the motor 811 rotates to drive the gearbox 812 to rotate, so as to realize torque amplification and power output, driving the connection mechanism to transit between folded and unfolded configurations. When there is no more drive signals, a free-hovering state is achieved. In some implementations, the connection mechanism may also have a matrix microphone mechanism configured for voice interaction, and folding and unfolding of the connection mechanism can be controlled through voice.

In some embodiments, as shown in FIG. 22, the electronic device further includes the flexible display 870. The flexible display 870 is fixed to the support plate 853. During the rotation of the first main body 10 and the second main body 20, the flexible display 870 unfolds or bends along with the unfolding or folding of the connection mechanism. Optionally, the flexible display 870 is fixed to the support plate 853 via adhesive bonding.

It should be noted that, the technical solutions or technical features described in the above embodiments may be combined or supplemented with each other without conflict. The protection scope of the present disclosure is not limited to the precise structures described in the foregoing embodiments and shown in the accompanying drawings, instead, all modifications, equivalent replacements, or improvements made within the principles of the present disclosure shall fall within the protection scope of the present disclosure as defined by the appended claims.

## Claims

1. A electronic device based on a motorized rotating-shaft assembly, comprising:
a first main body (10), a second main body (20) and a connection mechanism (30); wherein
the first main body (10) and the second main body (20) are connected via the connection mechanism (30);
the second main body (20) comprises a first surface (201) and at least one camera (22) arranged on the first surface (201); and
the connection mechanism (30) comprises the motorized rotating-shaft assembly (31) configured to drive at least one of the second main body (20) or the first main body (10) to rotate, such that at least part of the first surface (201) is exposed or concealed.

2. The electronic device of claim 1,
wherein rotation of the at least one of the second main body (20) or the first main body (10) causes the electronic device to transit between an unfolded configuration and a folded configuration;
in the folded configuration, the first main body (10) overlies at least part of the first surface (201); or
wherein the motorized rotating-shaft assembly (31) is configured to drive the second main body (20) and the first main body (10) to rotate synchronously in opposite directions.

3. The electronic device of claim 1 or 2, wherein the second main body (20) further comprises a second surface (202) opposite to the first surface (201), and a display (23) arranged on the second surface (202).

4. The electronic device of any one of claims 1 to 3,
wherein the connection mechanism (30) comprises a first connection portion (35) and a second connection portion (34);
the first connection portion (35) being accommodated in a first receiving chamber (11) of a housing of the first main body (10), and
the second connection portion (34) being accommodated in a second receiving chamber (21) of a housing of the second main body (20).

5. The electronic device of any one of claims 1 to 4, wherein the motorized rotating-shaft assembly (31) comprises:
a power drive component (32);
a transmission component (33), connected to the power drive component (32);
a first connection portion (35), connected to both the transmission component (33) and the first main body (10); and
a second connection portion (34), connected to both the transmission component (33) and the second main body (20).

6. The electronic device of claim 5,
wherein at least one of the first connection portion (35) or the second connection portion (34) comprises:
a bracket (341) and a torsion component (342),
the torsion component (342) being connected to the transmission component (33);
one end of the bracket (341) being movably connected to the torsion component (342), and the other end of the bracket (341) being connected to the second main body (20) or the first main body (10).

7. The electronic device of claim 5 or 6,
wherein the transmission component (33) comprises a first gear set (331), a second gear set (332), and a transmission shaft (333),
a first end of the first gear set (331) being connected to the power drive component (32), a second end of the first gear set (331) being connected to at least one of the first connection portion (35) or the second connection portion (34), and a third end of the first gear set (331) being connected to a first end of the transmission shaft (333); and
a first end of the second gear set (332) being connected to at least one of the first connection portion (35) or the second connection portion (34), and a second end of the second gear set (332) being connected to a second end of the transmission shaft (333).

8. The electronic device of any one of claims 1 to 7, wherein
the connection mechanism (30) comprises a curved housing (39), and
in a folded configuration, the curved housing (39) is located between the first main body (10) and the second main body (20), and protrudes from a top of the first main body (10).

9. The electronic device of any one of claims 1 to 8,
wherein a housing of the first main body (10) comprises a first region (101) near the connection mechanism (30), and a second region (102);
wherein in a folded configuration, the first region (101) is at least partially overlapped with the second main body (20), and a total thickness of the overlapped portion is substantially the same as or similar to the thickness of the second region (102).

10. The electronic device of claim 9, further comprising:
a speaker module (13) accommodated in the second region (102);
wherein the speaker module (13) comprises a speaker housing (131) and a sound-generating component (132) disposed in the speaker housing (131), at least one speaker outlet hole (133) being disposed on the speaker housing (131).

11. The electronic device of claim 10,
wherein a surface area of the at least one speaker outlet hole (133) is greater than 25 square millimeters, and/or, a sound outlet array (1021) is disposed on a first surface of the second region (102) near the at least one speaker outlet hole (133).

12. The electronic device of any one of claims 9 to 11,
wherein a button panel (14) is disposed on a second surface of the second region (102),
the button panel (14) comprising a first subregion (141) and a second subregion (142), the first subregion (141) comprising a first button (143), and the second subregion (142) comprising a second button (144).

13. The electronic device of claim 12,
wherein the second region (102) further comprises a fixed shaft (145) located between the first subregion (141) and the second subregion (142), the button panel (14) being rotatable around the fixed shaft (145), so that when one of the first button (143) and the second button (144) is pressed, the other one of the first button (143) and the second button (144) is raised.

14. The electronic device of any one of claims 1 to 13, further comprising:
a securing mechanism (50), detachably arranged on the first main body (10); and
a through hole (51) arranged on the securing mechanism (50) for engaging with a lanyard.

15. The electronic device of any one of claims 1 to 14, wherein at least one light strip module (24) is further disposed on the first surface (201) of the second main body (20).
